(19) Europäisches Patentamt
European Patent Office
Office européen des brevets

(11) **EP 2 021 157 B1**

(12) **EUROPEAN PATENT SPECIFICATION**

(45) Date of publication and mention
of the grant of the patent:
**14.10.2020 Bulletin 2020/42**

(21) Application number: **07732981.1**

(22) Date of filing: **25.05.2007**

(51) Int Cl.:
*B29C 35/02* (2006.01)      *B29C 35/08* (2006.01)
*B29C 51/42* (2006.01)      *B29L 9/00* (2006.01)
*B29L 31/00* (2006.01)      *B29K 105/16* (2006.01)

(86) International application number:
**PCT/GB2007/001963**

(87) International publication number:
**WO 2007/138290 (06.12.2007 Gazette 2007/49)**

(54) **METHOD OF AND APPARATUS FOR PRODUCING FORMABLE PRODUCTS**

VERFAHREN UND VORRICHTUNG ZUR HERSTELLUNG VON FORMBAREN PRODUKTEN

PROCÉDÉ ET APPAREIL DESTINÉS À LA PRODUCTION DE PRODUITS POUVANT ÊTRE
FORMÉS

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(30) Priority: **26.05.2006 GB 0610552**

(43) Date of publication of application:
**11.02.2009 Bulletin 2009/07**

(73) Proprietor: **The Technology Research Centre
Limited
Grantham, Lincs. NG32 3LT (GB)**

(72) Inventors:
• **TRANTER, Paul
  Melton Mowbray, Leicestershire LE13 1JP (GB)**
• **WALKER, Richard, Adam
  Wigston, Leicestershire LE18 3WD (GB)**
• **ISON, Stephen, John
  Leicester, Leicestershire LE7 2AN (GB)**
• **MILES, Andrew
  Stamford, Lincolnshire PE9 3RS (GB)**

(74) Representative: **Sanger, Phillip Simon et al
Vault IP Limited
Cavendish House
Waterloo Street
Birmingham B2 5PP (GB)**

## Description

Field of the Invention

The present invention relates to a method of processing a material, a material processing system, and to a processable material. The preferred embodiments relate to a method of and apparatus for producing formable products such as polymer products and thermoplastic materials which, in the preferred embodiments can provide more efficient manufacture of products materials through a process of selective through thickness heating using electromagnetic radiation.

Background of the Invention

US 6346 210 B1 discloses a method of shaping susceptor-based polymeric materials. US 5139407 discloses an apparatus for reducing thermoplastic material compression mold cycle time.

The broadly accepted definition of a thermoplastic is 'a material capable of softening or fusing or melting when heated and of hardening again when cooled'. Thermoplastic materials are widely utilised to form products in almost every industrial sector and almost every consumer product. The processing of thermoplastic polymers typically involves taking thermoplastic pellets and melting/softening/fusing by the application of heat energy followed by reshaping and cooling. This primary step of the conversion process may result in the forming of products which are ready for sale, for example in an injection moulding process. However, the primary step may also result in the production of an 'intermediate product' such as a parison or sheet for use in a secondary step conversion process; in the case of the parison for use in blow moulding and in the case of a sheet for use in thermoforming. This secondary step of the conversion process utilizes an important inherent characteristic of thermoplastic materials, in that; it also involves heating, reshaping and cooling of the material to form products. The ability of thermoplastic materials to undergo many cycles of the heating, reshaping and cooling renders them ideal for tertiary steps and so on. It also enables recycling of the materials at the end of the primary product's life through similar processing steps.

From a manufacturing and thermodynamic point of view the two critical sub-steps in the conversion of thermoplastic materials to products are heating and cooling. This is due to the fact that one or other of the heating or cooling steps are rate determining, that is they determine the rate of production, for almost all conversion processes. The reason for this, is two further typical properties of thermoplastics, in that they are typically poor thermal energy conductors (that is, insulating), with thermal conductivities typically in the range of 0.1 to 0.6 W.m-1.k-1and that by definition during the reshaping sub-step are not easily handled, that is they need time to cool and 'set', typically referred to as its de-mould temperature.

In conventional thermoplastic conversion processes heat is typically transferred to the thermoplastic materials via radiant or contact heating. Radiant energy, commonly referred to as infrared, has a wavelength in the range of 1 to 10 micrometres and will penetrate absorbing materials to a depth of approximately 1 to 2 micrometres before half of the available energy has been dissipated as heat. The process of heat transfer from the heat source and within the thermoplastic material is through conduction in the case of a solid material and a combination of conduction, convection and mechanical mixing in the case of molten materials. Contact heating similarly relies on conduction (or a combination of conduction, convection, and mixing) from the hot contact surface to heat the "bulk" of the material.

This results in a considerable time lag in transferring heat from the outer surfaces of the material to the centre of its mass in order to raise the temperature of the whole volume to a suitable level for processing to take place. This is especially disadvantageous in situations where the material to be heated exhibits a large volume to surface area ratio, for instance in a thick sheet. A major limitation to conventional heat-flow is the maximum allowable surface temperature of the work piece. As the material is heated from the outside in, there can be degradation of the material surface.

Moreover, the substantial time it takes to heat the polymeric material in conventional equipment leads to the melting of the material throughout its entire volume.

Some of the known processing techniques involve the following:

a) Thermoforming thick sheet. The traditional heating technique requires that the sheet be periodically removed from the heat source and allowed to 'soak', that is to allow the heat energy to reach a more even distribution, in order to prevent the material at the outer surface from being overheated and degraded.

b) Blow moulding. This heating technique tends to heat portions of the polymeric material at which balloon deformation is not desired. Accordingly, such systems typically need to employ an elaborate cooling mechanism, such as a cold air jet, to keep the areas of the parison outside of the mould cool. Moreover, with such conventional heating systems, it is not practical to heat different sections of the polymer volume to different temperatures. This may be advantageous, for example, when it is desired to create different physical properties within the blow moulded product itself (such as multiple areas of varying diameter, wall thickness or multiple areas consisting of different materials to be heated to different temperatures);

c) Extrusion. In this case large, expensive and complicated machines are generally necessary to heat polymers homogeneously. Such machines use a combination of mixing, usually by devices such as a rotating screw (generating high shear forces) and simultaneous thermal conduction through the heated inner surfaces of the extruder elements. These processes are inefficient and the processing time of polymers inside an extruder barrel and head is quite long. Extended processing times can have a signification degradation effect on the polymers being used and in turn on the physical properties of the extruded product. There are also problems present in the cooling of extruded polymer products, including the length of cooling bath required, the need to have blowers to dry off the extrudate after being cooled in a cooling bath and the need to cool quickly the heated polymers in the extrudate to minimize the effects of extended heating time on the polymer material being extruded.

The processing, by various means, of self-reinforcing plastic materials (as an example a highly oriented polypropylene fibre or tape with in a polypropylene or polypropylene/polyethylene copolymer (non-oriented) matrix), where the application of heat to enable the forming and/or bonding of layer(s) of the material can lead to reversion of the oriented polymer and loss of mechanical properties (particularly close to the surfaces, as discussed previously). The only alternative at present is to subject the entire volume of material to a lower level of heat over a considerably longer period of time so as to 'heat soak' (that is give time to allow the heat to redistribute) the material to a temperature above the softening/melting point of a (co)polymer outer layer, but maintaining this below the material reinforcement phase change point to minimise reversion of molecular orientation and subsequent loss of performance.

There are a number of fundamental and empirical equations or laws which are applicable to the rate of heat transfer in such a system; such as Fourier's Law of Conduction and Newton's law of cooling. The rate of heat transfer (RHT) associated with a conductive heat transfer process can generally be described by the relationship: RHT = f(A, $C_t$, Delta T), where A is the area available for heat transfer, $C_t$ is the thermal conductivity of the material, and Delta T is the available temperature driving force, which will decrease with time as the temperature of the material being heated increases. As previously stated the thermal conductivity, $C_t$, of unmodified thermoplastics is inherently low, thereby impeding the heat transfer in a conventional radiant or contact heating system. Furthermore, the heat conduction process results in melting of the material throughout its entire volume, leading to an undesirable temperature gradient, highly dependent on the thickness distribution or geometry of the part being heated, such as sheet. By way of contrast, microwaves have a wavelength of approximately 12.2 cm, which is large in comparison to the wavelength of infrared. Microwaves can penetrate to a much greater depth, typically several centimetres, into absorbing materials, as compared to infrared or radiant energy, before the available energy is dissipated as heat. In microwave-absorbing materials, the microwave energy is used to heat the material 'volumetrically' as a consequence of the penetration of the microwaves through the material. However, if a material is not a good microwave absorber, it is essentially 'transparent' to microwave energy.

Microwaves can penetrate absorbing materials to several centimetres before available energy is dissipated as heat. Benefits of microwave heating include: rapid, energy efficient volumetric and instantaneous heating; controllable heating; non-contact, non-surface heating (eliminating risks of polymer degradation). Microwave technology has been applied over many years in both the processing of foodstuffs and in the drying (removal of water) of various materials. In more recent times, microwave development has enabled industrial application of microwaves in many alternative fields such as:

a) curing and vulcanisation of plastics and rubber;
b) microwave recycling of tyres and foundry sand;
c) microwave based moisture measurement and drying for polymer processing;
d) microwave assisted processing of well bore cuttings for oil recovery and re-use; and
e) combined microwave heating and fluidised bed techniques for the food industry.

A number of materials can be heated by the absorption of microwaves. This is can be achieved by a dipolar heating mechanism and involves the stimulated movement of permanent dipoles and/or charges, as they attempt to oscillate in sympathy with the oscillating electromagnetic wave moving through the material. The material is thus heated by agitation of molecules and the subsequent viscous transfer of heat to neighbouring atoms and molecules. Other materials heat through Ohmic (resistance) heating as the electric field of the electromagnetic wave stimulates current flow within the material. Other microwave heating mechanisms include Maxwell-Wagner and magnetic heating mechanisms and these are described in Meredith "Industrial Microwave Heating", A.C Metaxas and R.J. Meredith IEE, May 1983 (ISBN 0-90604-889-3). The degree to which any material will heat in the presence of a microwave field is defined by its dielectric loss factor (otherwise known as loss tangent or complex dielectric permittivity), in effect a measure of the strength of interaction between the material and the electromagnetic wave. This heating is a bulk or volumetric effect.

Absorbing agents can also be used as an additive in plastics material to render the material heatable by electromagnetic radiation (usually microwave). Other agents, added to polymeric materials to change or improve certain properties, may also impart improved heatability to the polymer. A common absorber of microwaves used as an additive is carbon black. Carbon black has been incorporated into rubber tyres to improve the wear of the tyre. This material heats through Ohmic (resistance) heating.

Absorbing agents can also be used as an additive in plastics material to render the material heatable by electromagnetic radiation (receptive), usually microwave. These include zeolites, talcum powder, $ZnCl_2$, nylon, copper and other metal powders, ferrous oxide, manganese oxide, ceramics and oxides (e.g. $Co_2O_3$, $MnO_2$, SiC, $Al_2O_3$, $NaTiO_3$, $MgTiO_4$ etc.). A common absorber of microwaves used as an additive is carbon black. Carbon black has been incorporated into rubber tyres to improve the wear of the tyre. This material heats in a microwave field through Ohmic (resistance) heating and has been used to facilitate the curing and vulcanization of extruded rubber. At DC the tyre material resistance will be approaching infinity. However stray capacitance produced by the polymer (acting as a dielectric between the particles of carbon black embedded in the material) will have a low reactance. At high frequency the effective resistance of the material will therefore be quite low allowing current to flow between these capacitive elements resulting in $I^2R$ heating of the material. Other agents, added to polymeric materials to change or improve certain properties, may also impart improved 'heatability' to the polymer.

A more desirable alternative is to design the polymer to be receptive by incorporating polar groups (such as CO) into the polymer chain. The main limitation of modified receptive polymers is in their design and synthesis, that is, the incorporation of suitable receptive species (CO, ECO, EVA) into the polymer matrix to achieve high dielectric loss without detriment to physical, chemical and mechanical properties or cost.

In conclusion, polymeric materials are generally weakly absorbing, suffer from poor thermal conductivity and are vulnerable to hot spots since dielectric loss factor and absorption increase with temperature ('thermal runaway'). A lack of materials understanding has hindered development of such materials in polymer processing. Additives usually have pronounced visual, physical, or chemical effects which can be undesirable. Furthermore, when using additives as sensitizers one must achieve a uniform, distribution to avoid "hot-spots" which can give irregular results and damage the polymer. As previously discussed, most (commodity) plastics absorb weakly. To heat rapidly such materials the microwaves are optimally confined within a metal (reflecting) cavity, enabling the creation of a standing wave and high electric field strengths. However, the field pattern in larger 'multimode' cavities (size >86mm) is a standing wave and thus non-uniform - hot spots exist which cause uneven heating of the material. Multimode cavity ovens use a turntable and mode stirrers to scramble the field pattern and obtain more uniform heating at a cost to efficiency; this cannot provide the level of uniformity needed for polymer processing. Small deviations in energy density remain and these are amplified within the polymer due to the combination of thermal runaway and poor thermal conductivity of these materials preventing redistribution of heat. The result is local melt spots and degradation.

Wide web 'drying' systems use a meander type applicator through which the material passes. This is a long single chamber waveguide in a zigzag form. A magnetron is positioned at one end of the chamber and injects microwave energy. This feeds through the chamber, losing approximately 20% of its energy with each pass of the zigzag. A water load is positioned at the other end of the chamber to absorb any remaining energy. To allow the workload through the E-field at the correct point a slot is cut through the broad face of each pass of the applicator in the plane of the zigzag. To consume even a relatively modest amount of power the applicator must make several passes of the workload. Field strengths generated by such a system are also relatively low, typically 30 times lower than a similarly powered resonant system. The meander type of system cannot be modified to operate as a resonant system due to the long waveguide lengths involved. To improve uniformity the passes are arranged such that the waves generated are out of phase from one pass to the next, however, 20% pass to pass loss means that energy application is still non uniform. Also, instabilities in the microwave generator output plus back reflections caused by the slot, workload and bends distort the field pattern, resulting in non uniformity. This type of system is well suited to drying applications since receptivity is provided by the element to be removed (moisture). Once the moisture has been removed the material is dry and thus non-receptive, preventing thermal runaway, over-heating or burning of the material. The microwave energy applied can be non-uniform and requires limited control. Thus such systems fail to deliver the high uniformity, energy efficiency and electric field strengths necessary for this application.

Microwave energy has been used, for example, to dry planar structures such as wet fabrics. Water is microwave sensitive (particularly at a frequency of 2.456 GHz) and will evaporate if exposed to sufficient microwave energy for a sufficient period of time. However, the fabrics are typically transparent to microwaves, thereby resulting in the microwaves focusing on the water, which is essentially the only microwave-sensitive component in the material. Microwave energy has also been used to heat other materials, such as in the following references.

US-A-5,519,196 discloses a polymer coating containing iron oxide, calcium carbonate, water, aluminium silicate, ethylene glycol, and mineral spirits, which is used as the inner layer in a food container. The coating layer can be heated by microwave energy, thereby causing the food in the container to brown or sear.

US-A-5,070,223 discloses microwave sensitive materials and their use as a heat reservoir in toys. The microwave sensitive materials disclosed included ferrite and ferrite alloys, carbon, polyesters, aluminium, and metal salts.

US-A-5,338,611 discloses a strip of polymer containing carbon black used to bond thermoplastic substrates.

WO-A-2004/048463 discloses polymeric compositions which can be rapidly heated under the influence of electromagnetic radiation, and related applications and processing methods.

For example, it is known in the art that microwaves can be applied in the heating and processing of a polymeric tube for subsequent blow moulding of a medical product, as described in US-A-2003/183972, entitled "Method and apparatus for extruding polymers employing microwave energy". A polymer extrusion apparatus is disclosed utilizing a microwave energy for heating polymer feedstock material within the extruder tip and die unit just prior to formation of the extrudate product. This method employs microwave energy throughout the bulk of the material heating the entire material. Further examples use microwaves to render adhesive a bond layer of polymer and thus to weld two articles of polymer together (US-A-4795665) or form a seal (US-A-4600614).

EP-B-1115770 discloses an adhesive system to form reversible glued joints, in which a molecular group is added to a material to enhance the receptivity of the material to microwave energy. It describes a method in which normally irreversible joints are made reversible by the addition of a microwave receptive component into the matrix material on a molecular level (for instance by copolymerisation). A working example of this is with a moisture curing polyurethane adhesive based on diphenylmethane diisocyanate and polyetherpolyol. To this is added the receptor species, in this case lithium bromide\triamino - ethylamine complex. The receptor is blended with the adhesive components prior to casting at 3% by mass. In the case of this disclosure, the microwave receptive component is designed to trigger a chemical reaction whereby the adhesive is weakened (by molecular chain scission) to enable dismantling of parts.

A key limitation to the use of microwaves for heating polymeric materials is the low microwave receptivity of many useful polymers. The low microwave receptivity of the polymers thus requires either high powers or long irradiation times for heating such polymeric systems. In polymers designed specifically for microwave absorption, there is often a trade-off between their microwave properties and mechanical or thermal properties, i.e., the mechanical and thermal properties are often less than desirable.

## Summary of the Invention

The present invention seeks to provide an improved method and system for producing formable products such as polymers and thermoplastic materials and a formable material.

According to an aspect of the present invention, there is provided a method of processing a material as specified in claim 1.

The methods taught herein provide for the heating of only a portion of the material to be processed to form a product. As a result, the amount of energy required to be input into the material to be processed is less and the time required to produce the product, including the time required to cool the product after shaping or forming is substantially reduced compared to prior art systems. Initial tests by the inventors have shown marked reductions in production times, with consequential savings in cost and energy.

The differential heating of the first and second portions of the material can be by the properties of the materials forming the first and second portions and/or by targeted heating of the material, as explained below.

In one embodiment, the material is formed of at least first and second layers, each layer comprising one or both of said first and second portions of material.

In another embodiment the first and second portions are formed of first and second granular materials.

Advantageously, the step of differentially heating said first portion causes said first portion to melt.

In some embodiments, the method includes the step of providing for heating of said second portion by conductive or convective heat transfer from said first portion. The conductive or convective heating may cause the second portion to melt.

The differential heating step may apply heat energy to substantially the entirety of the material. It may be provided by electromagnetic energy, for example by microwave radiation.

An embodiment includes at least one of:

a) distributing said electromagnetic energy substantially evenly through said material; or

b) targeting said electromagnetic energy towards selected regions of the material to heat those regions.

The first portion of material may be substantially evenly distributed throughout the material or it may be locally positioned to achieve a variable temperature profile in the material.

The step of heating the first portion of material preferably allows the entire material to be mixed, transferred, shaped, stamped, injected or extruded to form a product.

In an embodiment, the method is practiced on a low molecular weight polymer, oligomer or monomer.

The material preferably includes one or more of:

one phase of material heatable by electromagnetic radiation, said phase being the first portion;

two or more phases heatable by electromagnetic radiation to different

extents, said phases being or including the first and second portions.

The material may be or may include a layered material, granular, liquid or a gel.

The portions may be different layers, different granular components, different liquids or gels. The material may be a crystalline, semi-crystalline or amorphous polymer.

In an embodiment, the material is processed by a melt processing technique which preferably includes at least one of: injection moulding, extrusion, extrusion-blow moulding, transfer moulding or injection-expansion moulding.

The differential heating step may include providing targeted heating of the material. Such targeted heating may be provided by steering heating energy to parts of the material to be processed. There may be provided a steerable antenna assembly.

Advantageously, the second portion acts as a heat sink to absorb heat energy from said first portion after said differential heating step. This has the significant advantage of being assisting in the reduction of temperature of the heated portion of the material and thus reduction in the processing time.

According to another aspect of the present invention, there is provided a material processing system as specified in claim 16.

According to another aspect of the present invention, there is provided a processable material as specified in claim 24.

The preferred embodiments exploit the relative receptivity of different materials and through their combination in various geometries and proportions to effect:

a) selective heating;
b) the ability to vary the energy density and location.

It will be appreciated that the terms "heated" and "non-heated" are relative terms and there may be a sliding scale of heating. It will also be appreciated that the term heat is intended to mean an increase in temperature.

Even though prior art moulding techniques have heated entirety of the material which must be made to flow, the inventors have discovered that in many instances it is necessary to melt or soften or fuse only a proportion of the material. As long as this proportion is sufficient that the bulk of the material is capable of flow and so enables the transfer of the material of forming of the material to a mould or through a die to shape the material into its final product form. The relative proportions of heated versus not heated material is dictated by the process to which the invention is applied and the performance requirement of the formed product. For example, the may be as little as 5% heated and 95% not heated for a highly reinforced compression moulded product or conversely 95% heated and 5% heated in a non-reinforced thermo formed product.

By selecting materials that are non-receptive to electromagnetic radiation (microwave), and those which are receptive, either in their natural state, or through the addition of some post processing or additives, and combining the two materials together in some form, the opportunity exists to apply heat energy to only those parts of the component that are 'receptive' (to the microwave energy). This brings with it a number of opportunities, not only from reduced energy requirements, and overall cycle time, but also in terms of processing and product/ materials' physical and chemical performance.

The inventors have envisaged that multiple structures could benefit from being processed by the selective heating process, and these can range from highly distributed non-receptive particles surrounded by other receptive matrix materials, to highly ordered and pre-defined regions of materials with varying degree of receptiveness to the microwave energy.

Thus, in one of the preferred embodiments, the bulk material retains a proportion in a non-softened or non-fused or non-melted state during the heating stage. However, the proportion or part of the bulk material which remains more solid or harder is advantageously of a form, shape or size to allow the whole of the bulk material to flow substantially uniformly once the heatable portion has been softened or melted or fused.

Preferably, the heating is provided by electromagnetic energy, which may be by microwave radiation.

Advantageously, the frequency and/or wavelength of electromagnetic radiation is chosen to interact more strongly with the part of the material to be heated. In one embodiment, the electromagnetic energy is directed towards only selected regions of the material to heat those regions preferentially. Extrapolating these concepts, the inventors have devised a method and system which provides controlled use of targeted or controlled variable electromagnetic irradiation in order to heat a material and to induce a desired temperature pattern within the material. In turn, this enables the controlled stretching of the material during process operations such as blow moulding, thermoforming and the like, to form 3-dimensional parts. Where predetermined regions of the material stretch to varying degrees as a consequence of the thermal state reached, the design of the part can benefit from optimum thickness at all regions of the part, which can be predetermined to optimise material usage. For instance, currently where deep drawn parts are concerned, the material usually begins as a thick sheet to enable the deeply drawn walls of the final part to reach a certain minimum thickness. In such a conventional process, the material is uniformly heated, resulting in equal 'stretchability' of the membrane and therefore, while the walls significantly reduce in thickness during the operation, the base of the part remains thick. As a result, material is in effect wasted. By inducing a higher temperature in the base of such a part relative to the walls during the forming operation, as taught herein, this wastage issue may be overcome or substantially reduced.

The electromagnetic energy density, atmosphere and temperature are preferably controlled to optimise processing of the polymer.

Advantageously the exposure of the electromagnetic absorbing phase is affected at elevated temperatures.

The portion of material heated advantageously allows the entire material to be mixed, transferred, shaped, stamped, injected or extruded to form a product; the material behaving in a generally uniform flowable manner.

Preferably, the method is practiced on a low molecular weight polymer, oligomer or monomer. The heating step can induce in-situ polymerisation of the monomer or low molecular weight polymer.

In the preferred embodiment, the material includes one or more of the following:

a) one or more phases of material effectively transparent to electromagnetic radiation and therefore substantially non-heatable; and
b) one or more phases of material heatable by electromagnetic radiation or two or more phases heatable by electromagnetic radiation to different extents.

The heatable phase or phases may be of the same polymeric nature as a non-heatable phase but modified to be absorbing. The heatable material may be a synthetic or natural polymer material in whole or part. In an embodiment, the material is carbon black.

Preferably, the material is in the form of powder, granules, pellets or uneven chippings, liquid or gel. The material may be a crystalline, semi-crystalline or amorphous polymer. In some embodiments, the material includes one or more of colorants, reinforcing or extending fillers, and functional additives. The functional additives may include flame retardants, fillers, processing aids, nano-fillers or nanocomposites and the like.

A melt processing technique is preferably used to process the material, which may be injection moulding, extrusion, extrusion-blow moulding or transfer moulding injection expansion moulding.

The invention also extends to a product processing system including means to provide selective heating to material to be processed.

The inventors have discovered that by making use of the property that some materials heat readily under a microwave (particularly those exhibiting a permanent dipole moment) and some do not (a phenomenon known as selective heating) the manufacture of thermoplastic and other forwarded materials can be substantially improved. The preferred embodiments of the present invention seek to improve the efficiency of such methods known in the art and can also provide for selective heating of only that region or proportion of the material necessary to form the final product shape.

Thus, the preferred embodiments are directed to the concept of more efficient conversion of materials using electromagnetic energy, by selectively heating a proportion of the volume of the thermoplastic material, that proportion being sufficient to render the material processable by whatever chosen means, for example any subsequent (downstream) forming (and cooling) technique. The term 'processable' is intended to mean the provision of sufficient melt-state or softening of a proportion of the thermoplastic material in order that the bulk plastic can be either mixed, transferred, shaped, stamped, injected, extruded, and the like so as to form a product. The heating of the material (herein denoted 'substrate') will be achieved by the exposure of the material to electromagnetic (especially microwave) energy, this type of radiation having the ability to penetrate through the entire volume of the substrate and to be absorbed preferentially in regions where the conditions are favourable.

By applying electromagnetic radiation (for example, microwave), heat may be generated very locally at a predetermined region of the volume/bulk or part in this way. The amount of energy thus applied may be carefully controlled and concentrated, since other regions would consist of non-absorbing material, transparent to the radiation used (for example, untreated polypropylene and polyethylene are transparent to microwave radiation). In this way the energy used may be reduced, the cycle times shortened and the mechanical and other properties of the final material be adapted and optimised for various requirements and applications.

The preferred embodiments deliberately engineer the material and/or heating technique, so that sites exist within the material that are both favourable and non favourable for absorption of the electromagnetic energy. Sites that are favourably absorptive will readily and rapidly heat under the influence of electromagnetic energy, while non-absorptive sites will do so to a far lesser degree. In other words, only a specified proportion of the volume of the substrate will be strongly affected by the electromagnetic energy, relative to other regions or portions. Thus, one could describe the effect achieved as the production of "hot-spots" within the material to be processed. However, in conventional mw heating systems, hot-spots also can occur undesirably due to inhomogeneous distribution of energy density. It is foreseen by the inventors that the application of high intensity controlled, uniform energy (using single mode) will be exploited to overcome hot spotting and enable selective areas to be heated reliably and predictably

This selective absorption gives rise to a number of features. Primarily, the electromagnetic energy interacts with only certain specified regions of the substrate and these will increase in temperature when electromagnetic energy is present. The heating of neighbouring unaffected regions within the bulk material will only occur later by the action of thermal conduction and other such mechanisms: As a smaller volume of the bulk material is actually heated (and by a faster and more efficient means) the material can be converted into a processable state in a far quicker time and/or potentially using less energy. Moreover, that material will contain less heat energy than would normally be present had the entire bulk material been heated. Thus, there will be considerable savings in energy. There also results considerable savings in time for a conversion process. The heating cycle is reduced, not only because the microwave heating mechanism occurs rapidly throughout the bulk (in contrast to the usual, slower method of thermal conduction), but also as less material is heated. The cooling cycle is also reduced since, following processing, the unheated regions of material act as heat sinks effectively to pull heat out of the neighbouring heated regions, significantly enhancing the overall cooling rate of the bulk material.

The preferred embodiments can be used for the selective/microwave heating of thermoplastic polymer materials. With regard to polymer processing, this technology offers many advantages for designers and processors, including:

a) selective heating (selective energy absorption):

of a specific polymer blend within the bulk,
of specific regions of the bulk material (for example, blow moulding or vacuum forming operations),
of the sample material and not other elements of the processing apparatus such as tooling and ancillary equipment, alternatively, of the tooling and ancillary equipment for processing techniques such as rotational moulding;

b) rapid through-thickness heating (energy penetration);
c) radically reduced heating / cooling cycle times (high speed);
d) high energy efficiency;
e) other environmental benefits - reduced emissions (it is a dry and fumeless process) and increased recycling potential (through enabling the more widespread use of self-reinforced single material components);
f) preservation of properties in self-reinforced parts (reduces risk of reversion);
g) increased productivity;
h) improved part quality and strength;
i) minimisation of thermal degradation due to reduced residence time in thermal process, and therefore thermal stabilisation additives can be reduced in polymer formulation.
h) optimal distribution of material, particularly thickness through targeted or controlled variable heating.

Accordingly, the teachings herein can provide processes and polymeric materials which facilitate the rapid, volumetric heating of the polymer using microwave energy. Additionally, they can provide processes and polymeric materials that have the ability to heat or melt only a portion of the polymeric material, sufficient to render the bulk material capable of flow, facilitating the shaping or further processing of the polymer.

Summary of the Drawings

Embodiments of the present invention are described below, by way of example only, with reference to the accompanying drawings, in which:

Figure 1 is a schematic diagram of an embodiment of material structure intended to provide selective heating of the material;
Figure 2 is a schematic diagram of a specific example of the embodiment of structure shown in Figure 1;
Figure 3 is a graph showing the reduction in cycle time achievable by a method or system of selective heating as taught herein;
Figure 4 shows a graph of one embodiment of selective heating;
Figures 5a to 5e show the effect of heating on a matrix;
Figure 6 shows an example of an embodiment of adjustable heating oven able to apply targeted heating energy to a material therewithin;
Figure 7 is a graph showing the effect of a movable or steerable antenna;

Figure 8 is a graph of a desired superposition of absorption spectra with microwave frequency peak; and
Figure 9 shows a practical embodiment of formation of a product by the concepts taught herein.

Description of the Preferred Embodiments

The teachings herein provide a method and system for selectively heating portions of a material prior to processing. This may be achieved by including within the material components which are sensitive to heating radiation and other components which are not so sensitive or by directing heating energy to only parts of the material to be processed. Such selective heating reduces the time and energy required to bring the material into a flowable or otherwise processable condition and reduces the cooling time.

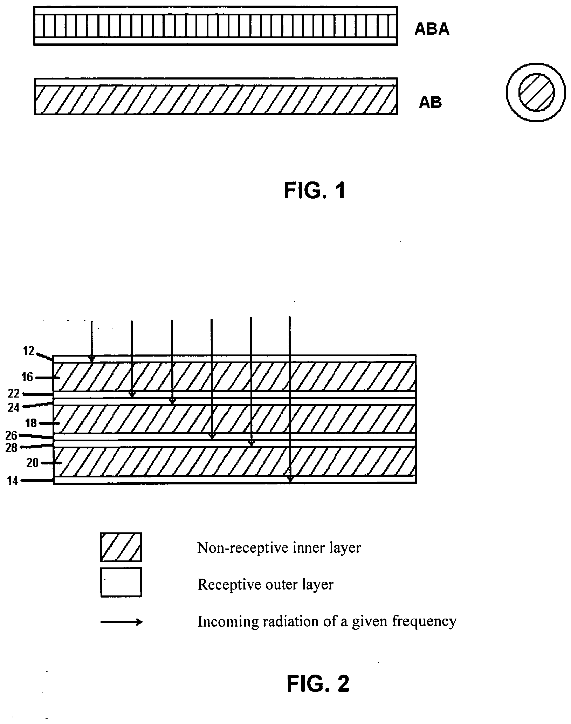

The preferred embodiments can be implemented at various scales (dimensions). The principle underlying one embodiment of processable structure is schematically illustrated in Figure 1.

The embodiment exploits the ability of polymers and other materials to absorb, or not, at given frequencies and the potential of narrow range (distribution) wavelength microwave techniques (that is, the ability to "tune" or "de-tune" to specific frequencies, discussed in detail below).

In one embodiment of the concept of selective heating, one or more microwave sensitive polymers may be incorporated as a discrete layer (or several layers) in a multilayered structure in such a way that this layer (or layers) may be preferentially heated prior to subsequent fabrication. In this embodiment, the material to be processed thus constitutes various layers which have at least two different receptivities to heating energy. Following the application of microwave energy, heat energy will then be conducted from the receptive (absorbing) layers to the adjacent layers of (unmodified) polymer which are essentially "transparent" to microwave energy, thereby allowing the total polymer structure to reach the required fabrication temperature more rapidly than in a conventional heating system. One specific example of this embodiment is a three layer (A/B/A) multilayer structure in which the A layers are essentially transparent to microwave energy, whereas the B layer is sensitive to microwave energy. Such a structure can be heated by microwave energy in such a way that the B layer is heated preferentially, the heat energy then being conducted to the A layers.

This structure can be shown, for example, as an AB or ABA structure (see Fig 1.) where A is a receptor and B is non-receptor. This structure would commonly be created using a co-extrusion process to create a sheet with this cross section, potentially slitting the sheet to create a number tapes that could then be woven if required. An alternative to this is the co-extrusion approach using fibre coating, in a similar manner, to create a circular fibre suitable for knitting.

In the particular example shown in Figure 2, the outer layers 12, 14 of polymer will be selectively heated in comparison to the inner layers 16, 18, 20. There are also provided in this embodiment head receptive interstitial layers 22, 24, 26, 28. These could be of the same material and form as the outer layers 12, 14 but it is envisaged they could also be of other materials/structures. They could also differ in materials and/or structures including from one another to provide different moulding characteristics as desired in any one application.

In the example of Figure 2, the outer layers 12, 14 may be of a polypropylene/polyethylene copolymer and the structure preferably includes oriented materials such as self-reinforced polypropylene. In this example, the inner layers 16, 18, 20 could be of oriented polypropylene, advantageously in the form of fibres.

In one example, where preservation of physical properties is desirable, the inventors have identified the use of selective heating to limit and/or control reversion of the oriented phase. This enables faster cycle times and/or thicker component sections to be processed.

The concept encompasses the capability of microwave processing to be able to manufacture parts from such materials while retaining the properties of the self-reinforced material. This could be achieved by making the thin copolymer coatings 12, 22, 24, 26, 28, 14 on the surface of the orientated core polymer layers 16, 18, 20 microwave absorbing. This enables their rapid heating, during the processing stage. However, the preferred embodiments go beyond this, as the inventors envisage rendering the material processable by means of melt-flow and not simply as a route to joining layers together adhesively. Further examples of materials include:

a) a receptive polymer;
b) a receptive polymer/non-receptor polymer (2 different polymers) or can include two or more phases of the same polymer;
c) a receptive polymer/ non-receptor non-polymer (for example GFNylon);
d) a non-receptive polymer / non-polymer receptor.

The terms "receptive" and "non-receptive" are relative terms and are related to a number of factors, including the frequency of the applied electromagnetic energy. Relative receptiveness can therefore also infer two or more phases of material which are both receptive but to different extents. Furthermore, the use of the term "receptive polymer" includes non-receptive with the addition of receptive species by means of blending, compounding, mixing, grafting or other additive techniques.

It will be appreciated that the receptive character of a material may alter, often significantly, due to its temperature and thus the relative receptiveness of that material phase will depend strongly on its temperature. This effect could be used to induce the duality of receptiveness to achieve selective heating of the plastic material, especially where a single material phase is desirable.

As discussed above, examples of receptive polymers are polyaniline and nylon. An example of a non-receptive polymer is polypropylene (by "non-receptive" we intend less receptive, that is not readily heatable by microwaves in the preferred embodiment).

Effective dielectric loss $\varepsilon$" gives a measure of the materials heatability by microwave energy and is responsible for the total loss of energy in the material due to dielectric relaxation (effectively a moving charge, or current) within the material. The more the dielectric loss, the more the material will heat. Relative dielectric constant is denoted as $\varepsilon$' (actual dielectric constant $\varepsilon = \varepsilon_0 . \varepsilon$') where $\varepsilon_0$ is the dielectric constant of free space. The loss tangent, tan $\delta = \varepsilon$"/$\varepsilon$', is effectively a measure of the dielectric loss $\varepsilon$", but normalized to the materials dielectric constant.

Table 1. Dielectric properties at **0.1,1 and 3 GHz** for several polymers. From Industrial Microwave Heating; A.S. Metaxas & R.J. Meredith; 1983. **Bold data is most important.**

| Frequency | | $10^7$ Hz | | $10^9$Hz | | $3 \times 10^9$Hz | |
|---|---|---|---|---|---|---|---|
| | T (°C) | E' | $\varepsilon$"$_{eff}$ | $\varepsilon$' | $\varepsilon$"$_{eff}$ | $\varepsilon$' | $\varepsilon$"$_{eff}$ |
| **Plastics** | | | | | | | |
| Araldite | - | - | - | - | - | 3.14 | 0.076 |
| Laminated fibreglass (69% fibreglass, 31% Bakelite) | 24 | 5.0 | 0.17 | 4.54 | **0.108"** | 4.4 | 0.128 |
| Melamine formaldehyde moulding compositions | 25 | 5.33 | 0.23 | 4.37 | **0.228** | 4.2 | 0.219 |
| Cellulose | - | 3.3 | 0.07 | 3.28 | **0.072"** | 3.24 | 0.094 |
| Polyamide$^{\$}$ | 25 | 3.24 | 0.07 | 3.06 | **0.043** | 3.02 | 0.036 |
| Polyethylene | 23 | - | - | 2.26 | **0.0024"** | 2.25 | 0.0026 |
| Polythene | 24 | 2.25 | 0.0004 | - | - | 2.25 | 0.0007 |
| Plexiglass, Perspex | 27 | 2.71 | 0.027 | 2.66 | **0.017*** | 2.6 | 0.015 |
| Polyester Formica$\Phi$ | 25 | 4.08 | 0.23 | 3.53 | **0.138** | 3.41 | 0.106 |
| Polytetrafluoroethylene (Teflon) | 22 | - | - | 2.1 | **0.0003** | 2.1 | 0.0003 |
| Polyester resin, Mylar | 20 | 2.4 | 0.0384 | 2.2 | **0.0088** | - | - |
| * 0.3 GHz. $\Phi$ = field parallel to laminate. $^{\$}$Dupont Nylon FM10001. | | | | | | | |

Another example uses the same principles as above but for low molecular weight polymers/oligomers/monomers and uses microwave energy to induce in-situ polymerisation of a monomer or LMW polymer. For example, the forming/moulding of an unpolymerised or partially polymerised material can make use of microwave energy to complete polymerisation, curing or other chemical reactions.

An example of a receptive polymer/non-receptive polymer combination would thus be polyaniline/polypropylene. An example of a receptive polymer/non-receptive non-polymer combination would be glass filled nylon.

In "Microwave Welding of Thermoplastics, R J Wise and I D Froment, 2001", the authors discuss the use of microwave absorbing additives within a thermoplastic matrix to enable non-receptive thermoplastic parts to be welded together using microwave irradiation. For such welding applications, these are usually employed within a receptive matrix (in this case polyaniline) to produce a microwave receptive implant to facilitate the joining of non-receptive material components, such as polyethylene, in the presence of a microwave field. Carbon black material has been mixed with uncured rubber prior to irradiation with electromagnetic radiation for the purpose of accelerated curing (vulcanisation). This is an example of a non receptive matrix and receptive additive combination, that is, a non-receptive polymer/non-polymer receptor (where the non-polymer absorbs the electromagnetic energy).

These processes typically employ a radiation frequency of 2450MHz.

Additives used in the art to increase the receptiveness of materials can exhibit a fairly narrow band response to electromagnetic energy. This provides greater opportunity selectively to tune in and/or tune out from a particular receptive phase (that phase containing a degree of the narrow band receptive additive).

Selective heating allows in the preferred embodiments decreased cycle times through the action of internal cooling. The internal cooling encompasses the application of selective heating to a matrix of receptive material containing regions of non-receptive material(s). This could be advantageous where many polymer conversion processes are concerned, for example extrusion, blow moulding, injection or compression moulding.

For example, in the case of glass filled nylon (the glass being the non-receptive phase and the nylon being the receptive polymer matrix), the nylon will be heated by electromagnetic irradiation across a broad band of frequencies or specifically at 2450MHz, while the glass phase, effectively transparent to the irradiation, will remain unheated (notwithstanding the usual effects of heat transfer between the polymer and non-polymer phases). Conventionally both the polymer and the glass would be heated as the thermal conduction heating mechanism does not discriminate between the two phases. The avoidance of energy absorption by the glass phase, through the use of high frequency electromagnetic (for example, microwave) heating, therefore provides a saving in the overall energy cost of the operation. Furthermore, microwave energy can be used to heat the receptive material rapidly and selectively to heat the receptive material. The rapid uptake of microwave energy by the absorbing phase, relative to the usual thermal conduction process, shortens the duration of the heating stage.

Once the matrix material has sufficient thermal energy to flow/form, rapid forming will be followed by a period of cooling during which the two materials will reach rapid thermal equilibrium. The approach provides for lower net thermal energy input to the material to be processed in order to achieve flow compared to traditional methods. This therefore reduces the thermal energy required to be removed from the material and the surrounding processing system during the cooling phase before the produced part can be removed from the system.

For example, in the case of injection moulding of glass filled nylon, at a critical injection point, enough of the bulk material is molten to allow viscous flow, while the non-receptor (glass) phase remains solid, or highly viscous, and below the temperature of the molten polymer matrix material but it can nevertheless be formed and in some cases flow with the molten phase. The bulk material is then rapidly injected into a mould at which point cooling to solidification then begins. In this case, the non-receptive phase (in this example the glass) is at a considerably lower temperature than its surrounding molten matrix (the nylon) and acts as a heat sink to draw the heat out of the matrix. This leads to rapid equilibrium of the temperature of the bulk material, resulting in a significantly reduced cooling time and a significant reduction in overall cycle time compared to prior art techniques which heat the entirety of the bulk material to be processed. The inventors have noted that, in the case of highly glass-filled materials, processing is still possible even at high solids volume fractions and associated high bulk viscosity. Therefore, they consider the efficacy of the approach taught herein is well founded.

It is envisaged that such a process would work for a number of material and receptor combinations. One such combination might be a material which includes of particles of polymer, each particle including a core of non-receptive phase transparent to electromagnetic energy with an outer skin of receptive phase around the particle.

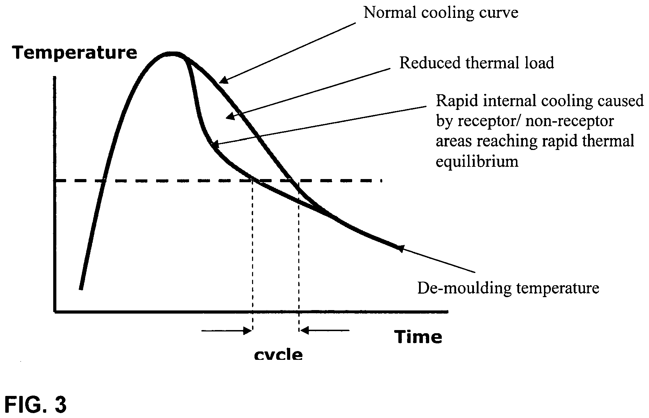

Figure 3 shows a graph of temperature against time demonstrating the advantage in terms of cycle time which is possible with the methods and systems taught herein. The temperature is that of those regions which are receptive to the heating energy.

The teachings herein are not limited to the polymer, the nature of the receptive phase, the particle form factor (geometry) or the percentage weight of the examples taught herein.

They can be used, for example, to improve the prior art processes disclosed in the earlier publications discussed above in the introduction of this specification, in particular in connection with additions required to the moulding apparatus disclosed in these documents (in the preferred embodiment by the provision of a microwave heating stage).

This opportunity introduces the concept we have called selective heating. It is known that thermoplastic polymer materials will still flow sufficiently for them to be moulded and formed whilst containing a high solid content within the viscous melt, for example the injection moulding of glass filled nylon, where the glass content can be well in excess of 50%, by weight (for example Ticona Celstran PA66-GF60-0104P10/11 and DuPont Zytel 75LG60HSL BK031). This situation demonstrates the forming of a solid particulate material within a molten matrix material where the bulk material is sufficiently heated to enable viscous flow. In this case the whole of the material (glass filler and polymer matrix) is heated to the same temperature prior to moulding, so offers minimal benefit in reduced cycle time through needing to extract less heat. In the case of selective heating, we propose to heat only a portion of the material which is physically required to enable the material to be moulded or deformed (flow) into the new form. This would be akin to heating only the polymer, and not the glass, in the glass filled polymer example above, and this is the challenge addressed by selective heating.

By selecting materials that are non-receptive to electromagnetic radiation (microwave), and those which are receptive, either in their natural state, or through the addition of some post processing or additives, and combining the two materials together in some form, the opportunity exists to apply heat energy to only those parts of the component that are 'receptive' (to the microwave energy).

This brings with it a number of opportunities, not only from reduced energy requirements, and overall cycle time, but also in terms of processing and product/ materials' physical and chemical performance.

Material structures to benefit from selective heating

Multiple structures could benefit from being processed by the selective heating process, and these can range from highly distributed non-receptive particles surrounded by other receptive matrix materials, to highly ordered and pre-defined regions of materials with varying degree of receptiveness to the microwave energy.

One particular application is based around the opportunity for self-reinforced polymer materials. These materials exploit the capability of some polymer materials (such as polypropylene (PP) to exhibit varying levels of crystallinity, and hence physical properties, subject to the processing the material has been subjected to previously. A common way of increasing the crystallinity, and physical properties of the material (commonly in sheet form), is to stretch it, with the elongation causing orientation of the amorphous molecular structure and higher levels of crystallinity, leading to an improved physical performance in the direction of draw. The crystallinity is reversed simply by allowing the molecules to be heated to above a certain temperature for that material (Tg) which is below their melting temperature. This property is used in polymer sheet form, either with single- or bi-axial orientation, to offer improved properties. One application of using this approach is improved strength polymer carrier bags commonly used in supermarkets.

It is known that multiple layers of this oriented material can be placed at different axis of alignment, either in simple layed up form, or in a woven or knitted form, for example, to achieve a range of enhanced physical characteristics (for example the BP Curve materials). These materials are then subjected to pressure and temperature for a period of time such that the material is sufficiently heated to cause a bond between the layers (with polymer layers welding to adjacent layers), but hopefully not such that the temperature the material has been exposed to has caused the orientated material to revert to its lower physical performance amorphous state.

As the materials rely on conducted heat 'soak' from the outside in, they are often limited to a small number of layers, only a few millimetres thick, as the time the material is exposed to temperatures that would destroy the orientation, is limited by the time it is necessary to achieve a high enough temperature to create bonding between those layers at the centre of the material thickness. Unfortunately, on many occasions destruction of the crystalline structure does occur, and a solution has been to use a copolymer (which melts at a slightly lower temperature(in the order of 20 deg C)) as an 'adhesive' between the layers.

It can be seen that in this instance a method of heating through the whole thickness at the same time, and heating only those areas creating the bonding interface between layers would be ideal.

This would work only in the case of the copolymer approach above (due to the different melting temperatures), but by creating a structure using the same polymer, but where one is a receptor, and the other is a non-receptor, this can achieve the simultaneous through thickness heating.

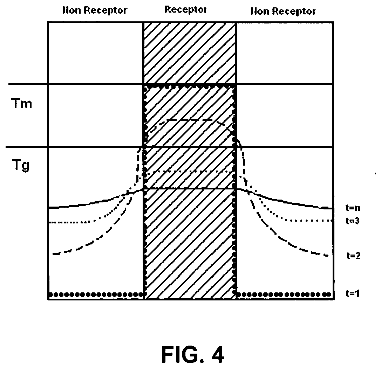

By correctly structuring the ratio of materials (receptor to non-receptor ratio) it can be seen that the heat energy applied can be carefully controlled, such that it is sufficient to heat the receptor layers of material that will bond with each other, whilst restricting this to a low enough total thermal load, that when the temperature within the receptor layers does start to equilibrate with its surroundings (the crystalline non-receptor part), the resultant thermal load is not high enough to he above the point at which significant reversion from crystalline to amorphous takes place. Fig 4. shows the heat flow transitioning to equilibrium from the initial selective heating (t=1) of just the receptor layer using microwave energy.

Required thermal load may be calculated as a function of;

$$\textit{Thermal load } = \textit{mass of receptor layer x specific heat capacity x temperature difference}$$

Levels of adhesion between layers in the end product would be a function of temperature, time and pressure applied, however the maximum load required could be calculated using the temperature difference between ambient material temperature and Tm, the melting temperature.

This structure can be shown, for example, as an AB or ABA structure (see Fig. 1) where A is a receptor and B is non-receptor. This structure would commonly be created using a co-extrusion process to create a sheet with this cross section, potentially slitting the sheet to create a number tapes that could then be woven if required. An alternative to this is the co-extrusion approach using fibre coating, in a similar manner, to create a circular fibre suitable for knitting.

The structure of Figure 2 shows one potential application, using the same polymer as the receptor and non-receptor materials, although others combination examples include:

Receptive polymer only
Receptive polymer/non-receptor polymer (2 different polymers) or can include two or more phases of the same polymer

Receptive polymer/ non-receptor non-polymer (glass filled nylon)
Non-receptive polymer / non-polymer receptor (heat the non-polymer)

Receptive and non-receptive are relative terms and are related to the frequency of the applied energy field. Furthermore, the use of the term receptive polymer includes non-receptive with the addition of receptive species by means of blending, compounding, mixing, grafting or other additive techniques.

The methods taught herein can be used in the fabrication of a large variety of polymeric articles, including not limited to films, foams, profiles, compounded pellets, fibres, woven or non-woven fabrics, moulded parts, composites, laminates, or any other physical thing that contains or is made from one or more polymeric materials.

The methods can significantly increase the speed and thus reduce the cost of producing such articles.

The teachings herein also encompass the possibility, as an addition or as an alternative to the above described embodiments, of targeting heat energy to a material to be heated thereby to heat only a portion of the material.

Internal Cooling Concept

Having established that whilst it is very easy to put in more heat than necessary (and most polymer thermoplastic conversion processes do this), together with the wasted energy input, additional energy burden for subsequent rapid cooling of the moulded/formed article and therefore increased cycle time, it is possible to reach a maximum required thermal load required to process a material, well below conventional thermoplastic processing techniques where the whole bulk of the polymer material is commonly raised to a similar temperature in order to facilitate forming. The example above demonstrates this for self reinforced materials commonly processed by pressure forming/ thermo forming/ vacuum forming techniques.

An advantage of applying less thermal energy in order to process a given thermoplastic polymer is that it then requires less thermal energy to be removed, post forming, in order for the product to be removed from the mould, for example, at or below that material's maximum de-moulding temperature (often called the heat distortion temperature). As cooling time is normally a function of the thermal energy load applied, the thermal conductivity of the polymer material being cooled, and the temperature of the adjacent mould tool, it can be seen that a reduced thermal energy input can result in significant cycle time savings. It should also be noted that heating only the receptor materials will have the effect of creating internal 'heat sinks'. Whilst this initially presents a restriction upon the flexibility of the processing window, it equally provides a potential rapid internal cooling mechanism for the moulded part, potentially significantly reducing cycle time. We have called this rapid cooling effect internal cooling. Figure 3. Shows the potential cooling/cycle time benefits from exploiting internal cooling

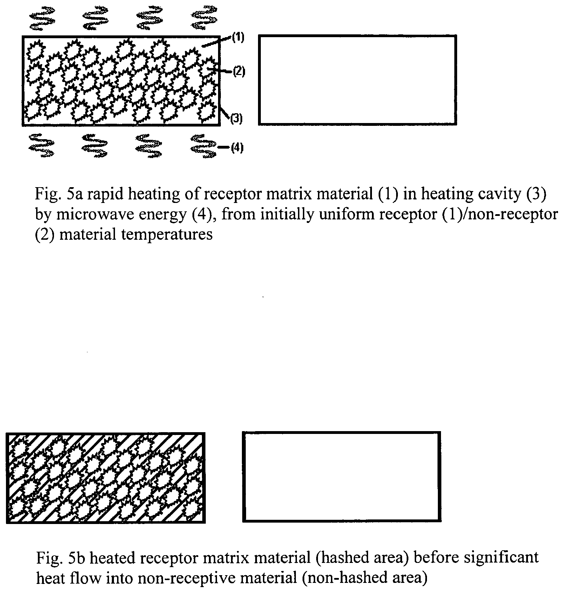

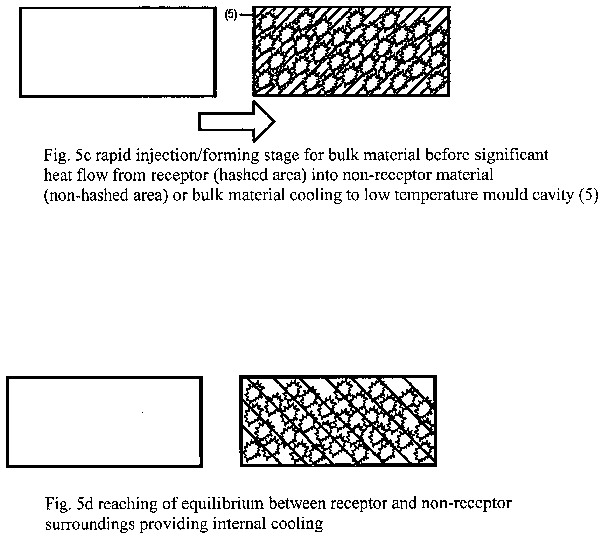

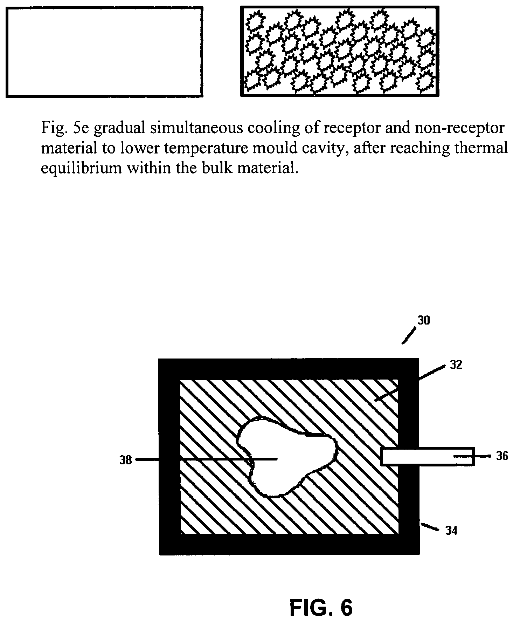

A difficulty with melt processing techniques is that they require the creation of a homogenous melt, with sufficient temperature for the viscous melt material to flow under pressure. These techniques commonly use electrical resistive heating, and whilst microwave heating of polymeric material has been used for many years, for example applied to compression and injection moulding this has relied upon the heating of thermoplastic material through its bulk, thus creating a thermal load sufficient to create a homogenous thermal load. Reference is made to Figures 5a to 5e.

Through the explanation above, of glass filled nylon, it can be seen that it is possible to process polymer materials heavily filled with solid, non-melting (at polymer processing temperatures) components. Therefore it could be particularly advantageous in terms of cycle time to be able to form components from materials where only a part of the material is heated, as long as the material retains sufficient molten flow to enable it to be processed. The selective heating approach is one such way of achieving this, through using, for example, receptive polymer/ non-receptive 'filler', where the 'filler' could be a polymer material or a non-polymer material.

Two opposing elements need to be overcome in order to successfully utilise this technique; achieving rapid heating and subsequent processing of the locally selectively heated bulk material, and achieving a sufficiently low viscosity to enable the material to be processed by conventional pressure forming techniques, such as injection moulding.

It is known that rapid heating through the whole material can be achieved by using microwave processing equipment. As soon as this material starts to increase in temperature, it will also start to lose temperature to its surroundings (the non-receptive 'filler'). Thus it can be seen that there is a time window in which to process (inject) this material into a mould to achieve a successful moulding process, if the energy is to be kept to a minimum, and well below that associated with heating of the whole bulk material. This will be a function of the rate of heating of the receptor materials, the thermal diffusivity of the separate materials represented within the bulk, and the receptor granule size (receptor raw material feed dimensions). From this aspect, the larger the granule size, the longer the time will be for the thermal load to equilibrate to the centre of a given component within the bulk, and the larger the processing time window.

However, conversely, the larger granule size will adversely impact upon the ability of the bulk material to exhibit viscous flow. Whilst it is known that larger size particles processed conventionally could be in the order of 1 mm (long fibre glass reinforced nylon), trials to incorporate recycled thermosetting materials have shown it possible to incorporate larger thermosetting rubber particles at a size of 2.5mm diameter, and still achieve successful injection moulding cycles when processing these non-melting 'particles' within a normal thermoplastic polypropylene matrix. Whilst, due to their thermosetting nature, these materials would be 'solid', it is appreciated that they will become more elastic at normal PP moulding temperatures.

In this way it can be seen that the operating window for maximum particle size and hence the time window in which to heat and process the material can be derived.

MathCAD™ can be used to develop a particle form and geometry incorporating regions of receptive and non-receptive polymer to provide an internal cooling effect. In one embodiment, the injection moulding of large (thick) automotive parts or pipes using for example polypropylene, this would be an injection moulding dual phase polypropylene granule. The volume fractions of the relative regions will depend on application. The modelling would take account of both the microscopic thermal behaviour and equilibration of the pellet as well as the macroscopic cooling behaviour of the material once injected into the mould. It is possible to establish a finite and practical time window whereby sufficient receptive phase is molten to effect flow of the bulk material into the mould and a sufficient proportion of the non-receptive phase is preserved in solid form to enable the internal cooling benefit during the cooling process. For the purpose of the microscopic model it is possible to assume a plastic sheet of thickness equal to pellet diameter, immersed in a medium at a temperature representing the melt flow temperature. MathCAD modelling provides information on the theoretical temperature distribution at varied depths through the thickness of the pellet / part. For a typical moulding pellet, assuming a volume fraction of receptive matrix phase in the region of 5 to 40% and an injection cycle of up to 10 seconds, it can be shown that a significant proportion of the original diameter (in some cases more than 50%) is retained as a solid core upon arrival in the mould. For the purpose of the macroscopic model it is possible to assume a plastic sheet of thickness equal to final part thickness, immersed in an infinite heat sink at ambient temperature. In the example above, these lead to a cycle time reduction of 20% to 60% in the cooling stage for a 2mm to 25mm final part thickness. These figures assume a twin layer, polymer pellet model. It is interesting to consider the potential savings for very thick wall section parts with conventional cycle times of up to 45 minutes.

The mean temperature of the entire bulk material may be calculated through the rule of mixtures, equation (1);

$$(1) \quad T_{\text{mean for bulk}} = T_{\text{cool core}} \times V_{f \text{ cool core}} + T_{\text{warm core}} \times V_{f \text{ warm core}} + T_{\text{matrix}} \times V_{f \text{ matrix}}$$

Where $V_f$ represents volume fraction present and T represents temperature.

It is interesting to evaluate the potentially very significant cycle time savings, in particular with thick walled components, to demonstrate the potential for this technology.

Pre-treating the non-receptor materials to coat them with the 'ABA' sheet or 'AB' fibre structure identified above, through for example coextrusion, may be advantageous in achieving an increased homogeneity, and more uniform particle size within the resulting moulding.

This technique could be advantageous where many polymer melt conversion processes are concerned, for example extrusion, blow moulding, injection or compression moulding.

Equipment

This can be achieved by particular equipment solutions, including microwave heating technologies for the conversion of polymers. Examples include uniform electric field twin cavity heaters for planar structures as described in Meredith "Industrial Microwave Heating", A.C Metaxas and R.J. Meredith IEE, May 1983 (ISBN 0-90604-889-3), page 170, and alternate systems such as large multimode resonant cavities with moving grid antenna, Applicators specifically designed for polymer conversion processing techniques such as injection moulding, compression moulding, blow moulding, pultrusion and extrusion are envisaged. Such applicators may include, for example, a single mode applicator (to establish an intense and well defined field pattern in the region of the material to be processed, useful for flat geometries such as sheet), multimode applicators such as the twin cavity and horn (for flat geometries) and other applicators such as helix applicator (for circular geometries, such as in injection moulding) to apply energy through a section of a material. The inventors envisage the use of long duration and short direction pulsing to improve the uniformity of heating. However, whilst pulsing to achieve improved uniformity allows hot-spots to cool during the off period so that the allowed peak temperature is not exceeded, it is not widely used because it reduces the mean power input and thereby extends the heating period.

Each example of selective heating equipment would utilise one or more microwave generators for generating a microwave having a specific frequency, and optionally; circulator(s) (to protect each magnetron from back reflections), waveguide(s) (to carry the energy to the cavity), applicator(s), typically each being a metal cavity, to contain the microwave energy and workload(s) and establish a preferred field pattern, array(s) or antenna(s) for introducing microwaves; tuning elements (such as E-H tuners) to ensure efficient coupling of the energy between the generator and the material processing cavity.

Optionally shielding devices (made from microwave reflecting materials such as metals) may be used to shield areas of material from microwave energy.

Thermoforming Equipment

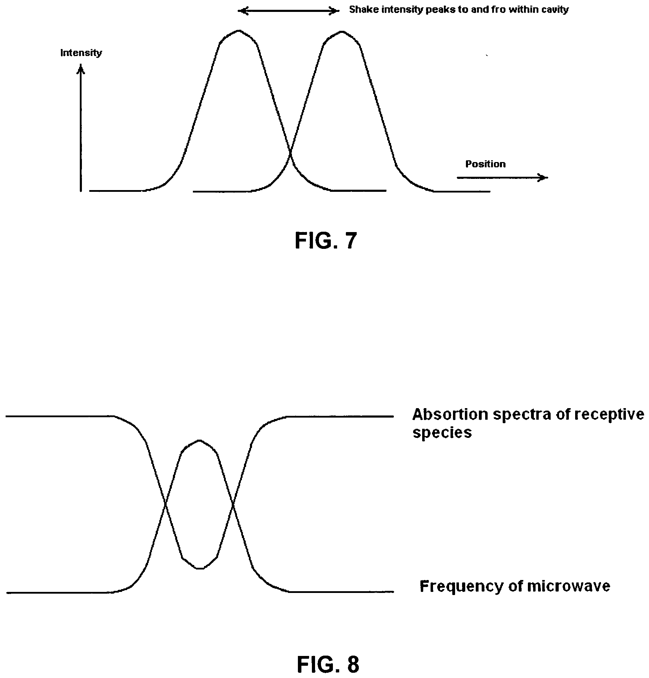

For example, to enable microwave heating technology for polymer thermoforming we envisage a microwave equipment solution comprising of one or more single mode highly resonant cavity heating systems. A simple system is detailed in Fig 7.35, Meredith "Industrial Microwave Heating", A.C Metaxas and R.J. Meredith IEE, May 1983 (ISBN 0-90604-889-3). Both multimode and single mode cavities act to contain the energy and, given suitable dimensions dependent on the wavelength of microwave used, enable the creation of a microwave resonant standing wave. For multimode cavities, the field pattern is characterised by periodic maxima (regions of high field strength) and minima (nodes, regions of low field strength). A single mode cavity, if designed correctly, has the potential to sustain resonance and in turn enable a high electric field strength across the material workload when said workload is positioned at the maxima in field pattern, A heating system using such a cavity has the potential to heat weakly absorbing polymers (or non absorbing polymers with microwave absorbing additives) both rapidly and uniformly.

This single mode cavity heating equipment is likely to include the combination of the following existing microwave components:

1) Microwave generator (source - to include power supply and launcher) - to generate and emit the microwave energy. Launchers include but are not limited to magnetrons, kylstrons, gyrotrons and solid state emitters.

2) Circulator - To prevent back reflection to the generator. Circulators are introduced into microwave circuits as a precautionary measure to avoid damage to a microwave generator, where low loss or no workload is present in the applicator. We envisage this would be required due to perceived low loss nature of polymer materials.

3) Waveguide - To contain and guide the microwave energy from generator to applicator. Due to industry distinguished bands, designated for industrial microwave heating, and commercial cost considerations, we expect this system to operate at a frequency of 2.45 GHz and preferably use WG9A waveguide.

4) Horn applicator - To spread energy from waveguide into cavity and prevent excitation of orthogonal modes - Horns are widely used in attenuation type moisture meters for sending and receiving electromagnetic signal through a wet dielectric sample. Such horns are often used in applicators for processing materials using microwave energy. Such a device would be ideal to prevent excitation of orthogonal modes when transferring energy from waveguide (of specific physical dimensions) to single mode cavity (usually of different dimensions).

4a) Single mode resonant cavity - In the industry there are a wide number of uses for high order, single mode resonant structures in low power applications such as frequency counters and filters. Essentially these consist of a metallic enclosure (cavity) where the launched microwave energy, in a required polarization, produces multiple reflections, giving rise to a standing wave pattern confined to one direction (or mode). These structures represent large volumes of stored energy and feature generally high absorption of incident energy by dielectric materials placed therein. The high gain and energy densities offered by such cavities would be extremely beneficial in heating weakly absorbing (low dielectric loss) polymer materials.

4b) Feed slots - situated in both front and back face of the cavity to enable flat (sheet) samples to be fed through the cavity. Such slots are often used in microwave heating systems to enable planar structures to be passed through the heating zone within the cavity.

5) Microwave chokes to minimise leakage of microwaves from a slot. These could be water loads or quarter-wave stub chokes, as detailed on p.287 of Meredith "Industrial Microwave Heating", A.C Metaxas and R.J. Meredith IEE, May 1983 (ISBN 0-90604-889-3). Proper function of such an applicator requires that horn and load (material) is properly matched to the output waveguide which acts to transfer the power to the material. This will optimize the loaded cavity for resonance at a predetermined frequency, given a range of materials:

5a) Matching iris or other tuning elements including but not limited to a 3 or 4 stub tuner, automatic tuning elements or an EH tuner (magic T) - Usually situated in the waveguide to properly match the microwave to horn and load (material).

5b) Lower movable 'short-circuit' piston - To enable fine tuning we envisage the use of a short circuit piston. This additional device could be arranged to allow minimum microwave leakage at slot position. Such a component is known in the art as a component to manipulate and vary the impedance matching of the microwave circuit and thus ensure good coupling of energy into the workload material.

Each resonant cavity would operate in a specified mode to give a particular field pattern, this field pattern uniform in a direction transverse to axial (the direction the samples are fed through the cavity). Microwave energy would be fed into the waveguide from the generator, pass through a circulator and then preferentially through a coarse tuning element such as a matching iris. It may enter the cavity via a horn applicator or a similar component. At the bottom of the cavity, the energy would, most simply, reflect off the top face of a movable short circuit piston and, for a given cavity length and frequency of microwave radiation, a standing wave would be established within the cavity between piston and iris plate. This standing wave enables very high electric field strengths to be established within the cavity. Any energy passing out of the cavity through the iris and back reflected energy from the iris would be impeded from interacting with the magnetron by the circulator.

A key issue in establishing resonance in the presence of varied workload (materials) is the subsequent variations in electrical length of the cavity due to the presence of the material (with relative dielectric constant greater than 1), which acts to compress the wave within the material. The variable cavity length (in the direction of the standing wave) afforded by the lower moving piston would enable the fine tuning of the cavity for varied sample sizes and dielectric properties during processing. Moreover, the position of this short circuit piston would be relevant to the amount of leakage of microwave energy that escapes the cavity, sideways from the slots, at the position of the workload. To minimise leakage we envisage microwave chokes incorporated into the cavity slots to prevent leakage of microwaves through these slots. Moreover, this design would allow leakage to be further minimised. By adjusting the lower piston so that the wall current at that 'slot' point is zero, the side leakage is minimised. The system would be tuned to the magnetron frequency via position of the iris plate, relative to magnetron, sample position and bottom piston position.

Regarding coarse tuning, the aperture of any iris may be optimized to enable matching the system to the expected range of materials to be heated. By moving the short-circuit piston up or down, the electrical length of the cavity could be maintained, enabling resonance for a range of materials.

As previously stated, the created field pattern would be effectively uniform in a direction transverse to axial (the direction the samples are fed through the cavity). This would be manifest as a uniform band of heating across the sample. By moving the sample (such as a sheet) through the slots of the cavity, the material would pass through the heating cavity and heat. The rate of heating and the final temperature of the sample moving through it could be varied, by varying speed of passage of sample and / or varying the electric field strength within the cavity. This would enable a final uniform temperature distribution across the sample, both axially and perpendicular to this axis, at the chosen final temperature.

A preferred system would include sensors and probes (including but not limited to InfraRed pyrometers and cameras) to monitor the real-time sample surface temperature both within and external to the cavity in the region(s) of the heating zone(s). This data could be used by a control system to balance speed of transit and microwave power input in real-time to obtain a desired final temperature of the part when exiting cavity.

An industrial heating system would not necessarily need each of these components but the principles of operation would remain the same. The system would include some component(s) to fine tune and sensor(s) to read sample temperature and feed this information back to a control system allowing variables such as power, tuning and transit speed to be adjusted. Although this system does not constitute a specific end process design for optimized processing of parts, the resonant cavity design employed can be regarded as a first generation heater in the technology platform for thermoforming, the first step in developing equipment to enable the microwave heating of large thick sheets of polymer for large scale thermoforming.

For thermo and vacuum forming, the preferred embodiment involves a configuration of single cell microwave heating units to create an industrial heating system. The simplest configuration would be a linear array of heating units. In this case, each unit, being a heating cell (for example some 3" (4.5 cm) wide), would sit next to the adjacent unit in a line, each unit closely coupled to one another mechanically. The separation between the adjacent cavities would be relatively small and designed such that a more or less uniform temperature rise is seen across whole sheet during processing - that is, no discontinuity in temperature from one cell to the next is developed, unless desired. Individually powered (preferably), these units would establish a uniform high intensity microwave field across a polymeric sheet and rapidly heat the said sheet as it slowly moves through the array, to the temperature required to form the part and reducing the overall cycle time of the heating process prior to the forming operation.

The electromagnetic energy density is a first-order parameter affecting the throughput rate. Ambient temperature within the oven would be set to minimise conventional cooling from the surfaces of the workload. To prevent such cooling of the workload the applicator could be heated using hot water or oil. The ambient temperature of the air in the applicator will also be raised in temperature removing some of the effects of surface cooling and heat transfer to 'cold' surfaces in the equipment. Short dwell tunnels may also be employed to ensure heat loss from the material already through the microwave applicator is minimised.

Targeted heating

Such single mode heaters could potentially used to provide targeted, controlled and variable heating within a material material. Such a system would use one or more of such heaters and process control software and associated algorithms to calculate the controlled variable temperature profile and enable the variable draw of the polymer sheet needed to deliver the ideal part. In practice, the power to each cell within the proposed system would be varied and the sheet moved relative to the array to create a pixelated heating pattern.

The inventors have noted that the resolution of such a system is limited to approximately half the wavelength of microwave used. Improved resolution could be obtained through techniques such as drisselling (by careful controlling movement of the sheet and by overlapping pixels as cell power is varied). Improve resolution could be obtained through the use of alternate applicators including knife edge, narrow slot heaters, dielectric filled waveguide(s) with the workload moving over the top of it, or ceramic applicator(s).

Other embodiments include:

1) moving emitter(s)/antenna(s) - physically moved relative to the workload, which when coupled with a moving cavity, allow the set up of a moving standing wave across the material to be heated;
2) one or more directional emitters/antennas, designed to produce a predictable and desirable heating pattern in the far field and, more preferably, in the near field to direct energy towards the workload and attain targeted heating;
3) a system comprising a microwave transparent mould located within a microwave reflective cavity;
4) a system based on one or more of the above but using absorbing walls and/or slanting or jagged walls to dampen or disrupt the harmonics of the resonant cavity and to simplify or manipulate the field pattern within the cavity;
5) a system combining one or more of the above features.

Targeted heating

Solid state emitters are now well enough developed to be an alternative to antenna(s). Variable frequency microwave technology can also be applied to the systems envisaged herein, particularly providing the possibility of tuning the frequency of the energy either to match or to avoid a particular polymer or non-polymer material absorption band; that is to "tune out" species not to be heated. This can be used, for example, to tune out amide groups within a nylon polymer. The processing equipment can be designed to suit not only each generic polymer conversion process but also to heat certain families of materials. In this way it is possible to design cavities and antenna(s) to suit a range of polymers and materials with different absorbing characteristics. Some specific examples are given below.

Figure 6 shows an example of a microwave-based device operable to apply targeted and adjustable microwave heating energy to a material therewithin. In the device 30, various component geometries can be formed within a transparent mould 32, that is a mould which is transparent or absorptive to microwaves located within a reflective or absorptive microwave cavity formed by cavity wall 34. A port and source 36 of microwave heating energy is able to direct microwave energy to specific parts of a material (for example a polymer) within the mould 32. A mould free space 38 may be included.

Within the mould 32 there may be provided features such as walls, antennae and the like, which have specific absorption characteristics so as to provide different heating effects within the mould 32 and thus on any material therewithin. Furthermore, the device 30 can achieve a controlled temperature gradient through the material therewithin by manipulating the microwave energy density distribution within the cavity of the mould 32, for example by means of: moving walls, parts, or antenna(s) in the cavity 32, manipulation of the input signal(s). In some applications the dielectric loss factor and/or reflectance of the walls and any combination of these could be adjusted so as to achieve controlled temperature and/or heating profiles. Heating profiles could be generated using equipment capable of providing a uniform electric field along with the selective addition of receptor within the polymer structure. These additions could be graded to provide different levels of receptivity and therefore differentials in the final heated profile.

The antenna or antennas can be scanned across or moved relative to the material to provide a heating pattern applied over the surface of the material. This could be achieved using a slotted applicator capable of accepting the material such that one section of the applicator is located above the material and the other below. In this instance the material would then move back and forth between the sections of the applicator to provide 2D movement. Alternately to achieve the same overall effect the material to be heated could be moved relative to the emitter in 2D maintaining the configuration described above.

Another embodiment provides thermal conditioning for polymer processing. This concept encompasses a number of techniques to enable, for example, selective heating and through-thickness heating, which allows, for example in the case of thermoforming, the processing of thicker sheets with decreased cycle time. One example utilises one or more optimised antennas capable of moving the overall microwave field pattern relative to the material sample heated. This could be achieved through moving the antenna or antennas, or electronically steering the emitted microwaves. Steering may be achieved via electronic methods, optics (reflecting and focussing elements) and other methods such as magnetic and plasma. Electronic steering is well known in the radar and communications industry and essentially relies on using interference to combine two or more output waves from emitters to create one or more concentrated lobes of power directed outwards from the antenna array. By varying the electronic phase of the two output waves, the directed of the emitted lobe can be changed. Focussed (directional) antenna microwave technology is currently used for communications and radar (detection). As such, such emitters are designed to work in free space and from a heating view point, can suffer from low power. It is noted that heating can be slow and efficiencies can be poor for the heating of weakly absorbing materials using this technique (as here we use a focussed, un-trapped beam that does not benefit from resonance, and once it has passed through the material, it is lost). However, a combination of present technology such as that used in high power radar solid state arrays, coupled with intelligent adaptive optics (reflective focussing elements) may be able to achieve the necessary powers. It is also noted a well defined interference lobe(s) is obtained in the 'far field' (many metres from the emitter antenna / array). It is possible that heating systems could be designed to work in the near field region (<4 m), where the microwave interference pattern is very complex, It is also possible that optics could be used to direct a microwave energy beam from a grid / array antenna or horn applicator to a portion of the material, a 'spot'. This spot could be deliberately moved over the material in a controlled manner to provide the targeted heating desired. Such optics components may include one or more parabolic dish reflectors to focus a wide beam. The beam could be made directional by varying the shape and direction of reflecting dish or its elements.

Another embodiment provides antenna(s) or array(s) which can be electronically steered. In the case of, "array steering" the energy is moved over the component in a desired fashion by phase-shifting the signal to the various components of the emitter array (elements of the antenna). This embodiment could be used in conjunction with the moving antenna(s)/cavity concept. The inventors also recognise that solid state emitters are now well enough developed to be an alternative to antennas. However, powers are currently limited. The inventors expect this limitation to be overcome through future technological developments.

Where targeted heating is concerned, metal cavities can be detrimental as they influence the wave pattern within (due to their preference to support certain wave patterns). However, in these systems, microwave containment would almost certainly be needed to ensure safety (and improve energy efficiency). The inventors envisage the use of an 'active' chamber to capture the energy and 1) build resonance, in spite of varied beam directions or 2) prevent resonant field patterns through the use of dampening absorbing walls (as in anechoic chamber), preferentially made from absorbing materials with surface topography such that standing waves are inhibited, or to absorb microwave energy and pass this energy to the material through thermal conduction.

In the case of a system providing a moving antenna(s)/cavity, the cavity(s) and / or antenna(s) would be physically moved relative to the component material. This concept may involve simultaneously moving a component part of the equipment that acts as the internal wall of the oven, allowing the establishment of a moving standing wave within the cavity so as to reap the benefits of resonant cavity heating, while avoiding the issues highlighted above or over heating of any specific part of the material being selectively heated in this manner. Application of uniform high intensity could be rastered across the surface of the material. Further the power of the source could be varied simultaneously relative to the position of the material to provide variable controlled selective heating to establish a variable profile of temperature within the material.

Figure 7 shows in graphical form the motion of a standing wave through movement or steering of the antenna and the use of a moving wall.

A more advanced design incorporates a solid state antenna or a steerable antenna array deliberately controlled to target regions of the raw material component to enable more intelligent versions of processes such as controllable wall thickness draw area for thermoforming. Targeting could also be used in a more sophisticated manner to target regions of the polymeric material prior to operation such as blow moulding or thermoforming of 3-dimensional shapes, thereby giving a saving in raw material usage.

An embodiment using resonance damping encompasses one or more of the above techniques but uses absorbing walls and/or slanting or jagged walls to dampen or disrupt the harmonics of the resonant cavity and simplify or manipulate the intensity field within the cavity, as previously described.

A variable frequency microwave processing (VFMP) embodiment encompasses manipulating the energy density profile through the component and the possibility of tuning the frequency of the energy either to match or to avoid a particular polymer or non-polymer material absorption band. For example, one could "tune out" species which it is desired not to heat, for instance the amide groups within a nylon polymer. The concept encompasses designing the equipment to suit not only each generic polymer conversion process but also to heat a certain families of materials. In this way the cavities and antenna can be designed to suit certain polymer combinations and to "ignore" others.

Figure 8 shows a graph of an embodiment desired superposition of absorption spectra with microwave frequency peak preferred for this arrangement.

Suitable processes for all the above discussed embodiments can be used, for matching workload (material geometry, absorbing properties and so on) to the cavity (applicator), increasing the material volume within the cavity to dampen any excessive hot spots arising from the confining of the microwave field within the oven and to anticipate the use of long duration and short direction pulsing to improve the uniformity of heating.

Another embodiment encompasses the application of microwave heating technologies such as a twin cavity applicator, for the conversion of polymers. Applicators are preferably specifically designed for polymer conversion processing techniques such as injection moulding, compression moulding, blow moulding, pultrusion and extrusion. Such applicators may include: a single mode applicator (for flat geometries, for example), multimode applicators such as the twin cavity and horn (for flat geometries) and other applicators such as a helix applicator (for circular geometries).

It is preferred that there is provided a software tool to predict various polymers' microwave and thermal behaviour from their chemical structure and microwave receptor filler content. This scientific capability could be created from modelling simulations including use of electromagnetic field solvers (Comsol FEMLAB, matLAB FEM and multiphysics) validated by materials characterisation data. Such software may allow the design of chemical structures in order to render the material receptive at given frequencies (or ranges).

Practical Embodiment

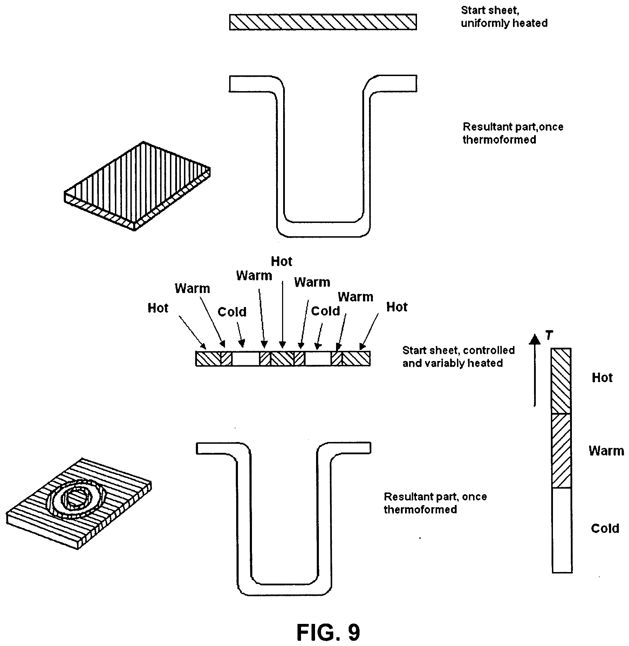

In one embodiment, shown in Figure 9, the electromagnetic energy is directed towards only selected regions of the material to heat those regions preferentially. The method and system can provide controlled use of targeted or controlled variable electromagnetic irradiation in order to heat a material and to induce a desired temperature pattern within the material. In turn, this enables the controlled stretching of the material during process operations such as blow moulding, thermoforming and the like, to form 3-dimensional parts. Where predetermined regions of the material stretch to varying degrees as a consequence of the thermal state reached, the design of the part can benefit from optimum thickness at all regions of the part, which can be predetermined to optimise material usage.

For instance, currently where deep drawn parts are concerned, the material usually begins as a thick sheet to enable the deeply drawn walls of the final part to reach a certain minimum thickness (Figure 9). In such a conventional process, the material is uniformly heated, resulting in equal 'stretchability' of the membrane and therefore, while the walls significantly reduce in thickness during the operation, the base of the part remains thick. As a result, material is in effect wasted. By inducing a higher temperature in the base of such a part relative to the walls during the forming operation, as taught herein, this wastage issue may be overcome or substantially reduced (Figure 9).

**Claims**

1. A method of processing a processable material formed of at least a first portion of a first thermoplastic material and a second portion of a second thermoplastic material different from the first thermoplastic material, the first thermoplastic material being receptive to microwave radiation and the second thermoplastic material being substantially non-receptive to microwave radiation, said processable material constituting an intermediate product, including the steps of:

applying heat energy to the processable material so as to heat differentially said first and second portions, wherein the differential heating is provided by microwave radiation, wherein said differential heating step causes the viscosity of said first portion to be reduced so as to enable said first portion to flow while the viscosity of said second portion is substantially unchanged or reduced by a lesser extent than the first portion by said differential heating step, and wherein the reduction in viscosity of the first portion is sufficient to enable the entire processable material to flow; and
shaping or forming said first and second portions of said processable material thereby to produce a product.

2. A method according to claim 1, including one or more of:

shaping or forming said first and second portions by a melt flow process;
shaping or forming said processable material by plastically deforming said first and second portions; and
shaping or forming said processable material by applying at least one of shear and stretch to the processable material.

3. A method according to claim 1 or 2, wherein said processable material is formed of at least first and second layers, each layer comprising one or both of said first and second portions of processable material; or wherein said first and second portions are formed of first and second granular materials, wherein said first and second granular elements are mixed together.

4. A method according to any preceding claim, wherein said step of differentially heating said first portion causes said first portion to melt.

5. A method according to any preceding claim, including the step of providing for heating of said second portion by conductive or convective heat transfer from said first portion.

**6.** A method according to claim 5, wherein said conductive or convective heating causes said second portion to melt.

**7.** A method according to any preceding claim, wherein said second portion acts as a heat sink to absorb heat energy from said first portion after said differential heating step.

**8.** A method according to any preceding claim, wherein said differential heating step heats said first portion to above its melting point and retains said second portion substantially below its melting point.

**9.** A method according to any preceding claim, including at least one of:

a) distributing microwave energy substantially evenly through said processable material; or
b) targeting microwave energy towards selected regions of the processable material to heat those regions.

**10.** A method according to any preceding claim, including the step of controlling at least one of: the electromagnetic energy density, pressure, and temperature of the processable material during processing.

**11.** A method according to any preceding claim, wherein said first portion is at least one of:

substantially evenly distributed throughout the processable material; and
locally positioned to achieve a variable temperature profile in the processable material.

**12.** A method according to any preceding claim, wherein the step of heating said first portion allows the entire processable material to be mixed, transferred, shaped, stamped, injected or extruded to form a product.

**13.** A method according to any preceding claim, wherein the processable material is processed by a melt processing technique which includes at least one of: injection moulding, extrusion, extrusion-blow moulding, transfer moulding or injection-expansion moulding.

**14.** A method according to any preceding claim, wherein the method is practiced on a low molecular weight polymer, oligomer or monomer; wherein the heating step induces in-situ polymerisation or chemical reaction of the monomer or low molecular weight polymer.

**15.** A method according to any preceding claim, wherein the heatable material is or includes at least one of: a synthetic or natural polymer material, carbon black, a ferrite, a metal oxide, zeolites, talcum powder, $ZnC12$, nylon, copper and other metal powders, ferrous oxide, manganese oxide, ceramics and oxides.

**16.** A material processing system for processing an intermediate product, including:

a material holder holding an intermediate product;
the intermediate product comprising a first portion of a first thermoplastic material and a second portion of a second thermoplastic material different from the first thermoplastic material, the first thermoplastic material being receptive to microwave radiation and the second thermoplastic material being substantially non-receptive to microwave radiation such that the application of microwave radiation to the intermediate product causes the viscosity of said first portion to be reduced so as to enable said first portion to flow while the viscosity of said second portion is substantially unchanged or reduced by a lesser extent than the first portion by such microwave radiation, the reduction in viscosity of the first portion being sufficient to enable the entire intermediate product to flow;
a heating station including a microwave radiation emitter configured to impart heat by microwave radiation differentially to said first and second portions of said intermediate product; and
a material shaping or forming station operable to shape or form said first and second portions thereby to produce a product.

**17.** A material processing system according to claim 16, wherein said material shaping or forming station is additionally operable to perform one or more of the following processes:

shaping or forming said first and second portions by melt flow of said material;
shaping or forming said material by plastically deforming said first and second portions; and
shaping or forming said material by applying at least one of shear and stretch to the material.

**18.** A material processing system according to claim 16 or 17, including a mixer for mixing first and second granular portions of material to be processed.

**19.** A material processing system according to any one of claim 16 to 18, wherein said heating station is operable to provide at least one of:

    a) distribution of microwave energy substantially evenly through said material; or
    b) targeting of microwave energy towards selected regions of the material to heat those regions.

**20.** A material processing system according to claim 19, wherein said heating station includes a steerable energy beam generator operable to steer microwave energy to parts of the material to be processed.

**21.** A material processing system according to any one of claim 16 to 20, including a controller operable to control at least one of: the electromagnetic energy density of said heating station, the pressure and the temperature of the material in said shaping or forming station.

**22.** A material processing system according to any one of claims 16 to 21, wherein said forming or shaping station provides for the entire material to be at least one of: mixed, transferred, shaped, stamped, injected or extruded to form a product.

**23.** A material processing system according to any one of claims 16 to 22, wherein said forming or shaping station is operable to effect at least one of: injection moulding, extrusion, extrusion-blow moulding, transfer moulding and injection-expansion moulding.

**24.** A processable bulk material, including a first portion of a first thermoplastic material and a second portion of a second thermoplastic material different from the first thermoplastic material, the first thermoplastic material being receptive to microwave radiation and the second thermoplastic material being substantially non-receptive to microwave radiation such that the application of microwave radiation to the processable material causes the viscosity of said first portion to be reduced so as to enable said first portion to flow while the viscosity of said second portion is substantially unchanged or reduced by a lesser extent than the first portion by such microwave radiation, the reduction in viscosity of the first portion being sufficient to enable the entire processable material to flow; wherein said first and second portions are able to be shaped or formed together to form a product.

**25.** A processable material according to claim 24, wherein said first and second portions are able to be shaped or formed together by one or more of: a melt flow process, plastic deformation, and application of at least one of shear and stretch thereto.

**26.** A processable material according to claim 24 or 25, wherein at least one of the first and second portions includes a reinforcement component.

**27.** A processable material according to any one of claims 24 to 26, wherein said first portion is one of:

    substantially evenly distributed throughout the processable material; and
    locally positioned to achieve a variable temperature profile in the processable material.

**28.** A processable material according to any one of claims 24 to 27, wherein the material includes a low molecular weight polymer, oligomer, monomer, a synthetic or natural polymer material, carbon black, a ferrite or a metal oxide, zeolites, talcum powder, ZnC12, nylon, copper and other metal powders, ferrous oxide, manganese oxide, ceramics and oxides.

**29.** A processable material according to any one of claims 24 to 28, wherein the material is or includes a layered material, granular material, liquid or gel and wherein said first and second portions are different layers, different granular components, different liquids or different gels.

**Patentansprüche**

**1.** Verfahren zur Verarbeitung eines verarbeitbaren Materials, das aus mindestens einem ersten Teil eines ersten thermoplastischen Materials und einem zweiten Teil eines zweiten thermoplastischen Materials, das sich von dem ersten thermoplastischen Material unterscheidet, gebildet ist, wobei das erste thermoplastische Material für Mikrowellenstrahlung aufnahmefähig ist und das zweite thermoplastische Material im Wesentlichen nicht für Mikrowellenstrahlung aufnahmefähig ist, wobei das verarbeitbare Material ein Zwischenprodukt darstellt, einschließlich der folgenden Schritte:

Anlegen von Wärmeenergie an das verarbeitbare Material, um so den ersten und den zweiten Teil unterschiedlich zu erwärmen, wobei die unterschiedliche Erwärmung durch Mikrowellenstrahlung erfolgt, wobei der Schritt der unterschiedlichen Erwärmung bewirkt, dass die Viskosität des ersten Teils verringert wird, um dem ersten Teil das Fließen zu ermöglichen, während die Viskosität des zweiten Teils im Wesentlichen unverändert bleibt oder durch den Schritt der unterschiedlichen Erwärmung um ein geringeres Ausmaß als der erste Teil verringert wird, und wobei die Verringerung der Viskosität des ersten Teils ausreicht, um dem gesamten verarbeitbaren Material das Fließen zu ermöglichen; und
Formen oder Bilden des ersten und zweiten Teils des verarbeitbaren Materials, um dadurch ein Produkt herzustellen.

2. Verfahren nach Anspruch 1, einschließlich eines oder mehrerer von:

Formen oder Bilden des ersten und zweiten Teils durch einen Schmelzflussprozess;
Formen oder Bilden des verarbeitbaren Materials durch plastisches Verformen des ersten und zweiten Teils; und
Formen oder Bilden des verarbeitbaren Materials durch Anlegen von mindestens einer Scherung und Dehnung an das verarbeitbare Material.

3. Verfahren nach Anspruch 1 oder 2, wobei das verarbeitbare Material aus mindestens einer ersten und einer zweiten Schicht gebildet wird, wobei jede Schicht einen oder beide der ersten und zweiten Teile des verarbeitbaren Materials umfasst; oder wobei der erste und der zweite Teil aus einem ersten und einem zweiten körnigen Material gebildet werden, wobei das erste und das zweite körnige Element miteinander vermischt werden.

4. Verfahren nach einem vorhergehenden Anspruch, wobei der Schritt des unterschiedlichen Erwärmens des ersten Teils bewirkt, dass der erste Teil schmilzt.

5. Verfahren nach einem vorhergehenden Anspruch, einschließlich des Schritts des Bereitstellens zum Erwärmen des zweiten Teils durch leitende oder konvektive Wärmeübertragung von dem ersten Teil.

6. Verfahren nach Anspruch 5, wobei das leitende oder konvektive Erwärmen bewirkt, dass der zweite Teil schmilzt.

7. Verfahren nach einem vorhergehenden Anspruch, wobei der zweite Teil als Wärmesenke wirkt, um Wärmeenergie von dem ersten Teil nach dem Schritt des unterschiedlichen Erwärmens zu absorbieren.

8. Verfahren nach einem beliebigen vorhergehenden Anspruch, wobei der Schritt des unterschiedlichen Erwärmens den ersten Teil auf über dessen Schmelzpunkt erwärmt und den zweiten Teil wesentlich unter dessen Schmelzpunkt hält.

9. Verfahren nach einem vorhergehenden Anspruch, einschließlich mindestens eines von:

a) Verteilen der Mikrowellenenergie im Wesentlichen gleichmäßig durch das verarbeitbare Material; oder
b) Richten der Mikrowellenenergie auf ausgewählte Bereiche des verarbeitbaren Materials, um diese Bereiche zu erwärmen.

10. Verfahren nach einem vorhergehenden Anspruch, einschließlich des Schritts des Steuerns mindestens eines von: der elektromagnetischen Energiedichte, dem Druck und der Temperatur des verarbeitbaren Materials während der Verarbeitung.

11. Verfahren nach einem vorhergehenden Anspruch, wobei der erste Teil mindestens eines der folgenden ist:

im Wesentlichen gleichmäßig über das verarbeitbare Material verteilt; und
lokal positioniert, um ein variables Temperaturprofil im verarbeitbaren Material zu erreichen.

**12.** Verfahren nach einem vorhergehenden Anspruch, wobei der Schritt des Erwärmens des ersten Teils das Mischen, Übertragen, Formen, Stempeln, Injizieren oder Extrudieren des gesamten verarbeitbaren Materials ermöglicht, um ein Produkt zu bilden.

**13.** Verfahren nach einem vorhergehenden Anspruch, wobei das verarbeitbare Material durch eine Schmelzverarbeitungstechnik verarbeitet wird, die mindestens eines von folgendem beinhaltet: Spritzgießen, Extrusion, Extrusionsblasformen, Transferformen oder Spritz-Expansionsformen.

**14.** Verfahren nach einem vorhergehenden Anspruch, wobei das Verfahren an einem Polymer, Oligomer oder Monomer mit niedrigem Molekulargewicht durchgeführt wird; wobei der Schritt des Erwärmens eine In-situ-Polymerisation oder eine chemische Reaktion des Monomers oder Polymers mit niedrigem Molekulargewicht induziert.

**15.** Verfahren nach einem vorstehenden Anspruch, wobei das erwärmbare Material mindestens eines der folgenden ist oder beinhaltet: ein synthetisches oder natürliches Polymermaterial, Ruß, ein Ferrit, ein Metalloxid, Zeolithe, Talkumpuder, ZnC12, Nylon, Kupfer- und andere Metallpulver, Eisenoxid, Manganoxid, Keramiken und Oxide.

**16.** Materialverarbeitungssystem zur Verarbeitung eines Zwischenprodukts, einschließlich:

einen Materialhalter, der ein Zwischenprodukt hält;
wobei das Zwischenprodukt einen ersten Teil aus einem ersten thermoplastischen Material und einen zweiten Teil aus einem zweiten thermoplastischen Material, das sich von dem ersten thermoplastischen Material unterscheidet, umfasst, wobei das erste thermoplastische Material für Mikrowellenstrahlung aufnahmefähig ist und das zweite thermoplastische Material im Wesentlichen nicht für Mikrowellenstrahlung aufnahmefähig ist, sodass die Anwendung von Mikrowellenstrahlung auf das Zwischenprodukt bewirkt, dass die Viskosität des ersten Teils verringert wird, um dem ersten Teil das Fließen zu ermöglichen, während die Viskosität des zweiten Teils im Wesentlichen unverändert bleibt oder durch solche Mikrowellenstrahlung um ein geringeres Ausmaß als der erste Teil verringert wird, wobei die Verringerung der Viskosität des ersten Teils ausreicht, um dem gesamten Zwischenprodukt das Fließen zu ermöglichen;
eine Erwärmungsstation einschließlich eines Mikrowellenstrahlungsemitters, der konfiguriert ist, um Wärme durch Mikrowellenstrahlung unterschiedlich auf den ersten und zweiten Teil des Zwischenprodukts zu übertragen; und
eine Materialformungs- oder -bildungsstation, die betreibbar ist, um den ersten und zweiten Teil zu formen oder zu bilden, wodurch ein Produkt hergestellt wird.

**17.** Materialverarbeitungssystem nach Anspruch 16, wobei die Materialformungs- oder -bildungsstation zusätzlich betreibbar ist, um einen oder mehrere der folgenden Verfahren durchzuführen:

Formen oder Bilden des ersten und zweiten Teils durch Schmelzfluss des Materials;
Formen oder Bilden des Materials durch plastisches Verformen des ersten und zweiten Teils; und
Formen oder Bilden des Materials durch Anlegen von mindestens einer Scherung und Dehnung an das Material.

**18.** Materialverarbeitungssystem nach Anspruch 16 oder 17, einschließlich eines Mischers zum Mischen des ersten und zweiten körnigen Teils des zu verarbeitenden Materials.

**19.** Materialverarbeitungssystem nach einem der Ansprüche 16 bis 18, wobei die Erwärmungsstation betreibbar ist, um mindestens eines von folgendem bereitzustellen:

a) Verteilung der Mikrowellenenergie im Wesentlichen gleichmäßig durch das Material; oder
b) Richten der Mikrowellenenergie auf ausgewählte Bereiche des Materials, um diese Bereiche zu erwärmen.

**20.** Materialverarbeitungssystem nach Anspruch 19, wobei die Erwärmungsstation einen lenkbaren Energiestrahlgenerator beinhaltet, der betrieben werden kann, um Mikrowellenenergie zu Stellen des zu verarbeitenden Materials zu lenken.

**21.** Materialverarbeitungssystem nach einem der Ansprüche 16 bis 20, einschließlich einer Steuerung, die betreibbar ist, um mindestens eines von folgendem zu steuern: die elektromagnetische Energiedichte der Erwärmungsstation, den Druck und die Temperatur des Materials in der Formungs- oder Bildungsstation.

22. Materialverarbeitungssystem nach einem der Ansprüche 16 bis 21, wobei die Formungs- oder Bildungsstation für das gesamte Material bereitstellt, dass es mindestens eines der folgenden ist: gemischt, übertragen, geformt, gestempelt, injiziert oder extrudiert, um ein Produkt zu bilden.

23. Materialverarbeitungssystem nach einem der Ansprüche 16 bis 22, wobei die Formungs- oder Bildungsstation betreibbar ist, um mindestens eines der folgenden zu bewirken: Spritzgießen, Extrusion, Extrusionsblasformen, Transferformen oder Spritz-Expansionsformen.

24. Verarbeitbares Schüttgut, das einen ersten Teil eines ersten thermoplastischen Materials und einen zweiten Teil eines zweiten thermoplastischen Materials, das sich von dem ersten thermoplastischen Material unterscheidet, beinhaltet, wobei das erste thermoplastische Material für Mikrowellenstrahlung aufnahmefähig ist und das zweite thermoplastische Material im Wesentlichen nicht für Mikrowellenstrahlung aufnahmefähig ist, sodass die Anwendung von Mikrowellenstrahlung auf das verarbeitbare Material bewirkt, dass die Viskosität des ersten Teils verringert wird, um dem ersten Teil das Fließen zu ermöglichen, während die Viskosität des zweiten Teils im Wesentlichen unverändert bleibt oder durch solche Mikrowellenstrahlung in geringerem Maße als der erste Teil verringert wird, wobei die Verringerung der Viskosität des ersten Teils ausreicht, um dem gesamten verarbeitbaren Material das Fließen zu ermöglichen; wobei der erste und der zweite Teil in der Lage sind, zusammen geformt oder gebildet zu werden, um ein Produkt zu bilden.

25. Verarbeitbares Material nach Anspruch 24, wobei der erste und der zweite Teil durch eines oder mehrere der folgenden geformt oder gebildet werden können: einen Schmelzflussprozess, plastische Verformung und Anwenden von mindestens einem von Scherung und Dehnung darauf.

26. Verarbeitbares Material nach Anspruch 24 oder 25, wobei mindestens einer der ersten und zweiten Teile eine Verstärkungskomponente beinhaltet.

27. Verarbeitbares Material nach einem der Ansprüche 24 bis 26, wobei der erste Teil eines der folgenden ist:

   im Wesentlichen gleichmäßig über das verarbeitbare Material verteilt; und
   lokal positioniert, um ein variables Temperaturprofil im verarbeitbaren Material zu erreichen.

28. Verarbeitbares Material nach einem der Ansprüche 24 bis 27, wobei das Material ein Polymer, Oligomer, Monomer mit niedrigem Molekulargewicht, ein synthetisches oder natürliches Polymermaterial, Ruß, einen Ferrit oder ein Metalloxid, Zeolithe, Talkumpuder, ZnC12, Nylon, Kupfer- und andere Metallpulver, Eisenoxid, Manganoxid, Keramiken und Oxide beinhaltet.

29. Verarbeitbares Material nach einem der Ansprüche 24 bis 28, wobei das Material ein Schichtmaterial, körniges Material, eine Flüssigkeit oder ein Gel ist oder beinhaltet und wobei der erste und der zweite Teil unterschiedliche Schichten, unterschiedliche körnige Komponenten, unterschiedliche Flüssigkeiten oder unterschiedliche Gele sind.

## Revendications

1. Procédé de traitement d'une matière traitable formée d'au moins une première partie d'une première matière thermoplastique et d'une seconde partie d'une seconde matière thermoplastique différente de la première matière thermoplastique, la première matière thermoplastique étant réceptive au rayonnement micrométrique et la seconde matière thermoplastique étant sensiblement non réceptive au rayonnement micrométrique, ladite matière traitable constituant un produit intermédiaire, comprenant les étapes suivantes :

   l'application de l'énergie thermique à la matière traitable de manière à chauffer de manière différentielle lesdites première et seconde parties, dans lequel le chauffage différentiel est fourni par un rayonnement micrométrique, dans lequel ladite étape de chauffage différentiel entraîne la réduction de la viscosité de ladite première partie de manière à permettre à ladite première partie de s'écouler lorsque la viscosité de ladite seconde partie est sensiblement inchangée ou réduite dans une moindre mesure que la viscosité de la première partie à l'aide de ladite étape de chauffage différentiel, et dans lequel la réduction de la viscosité de la première partie est suffisante pour permettre à toute la matière traitable de s'écouler ; et
   le façonnage ou le formage desdites première et seconde parties de ladite matière traitable pour fabriquer ainsi un produit.

**2.** Procédé selon la revendication 1, comprenant :

le façonnage ou le formage desdites première et seconde parties à l'aide d'un procédé d'écoulement à l'état fondu ;
le façonnage ou le formage de ladite matière traitable par déformation plastique desdites première et seconde parties ; et
le façonnage ou le formage de ladite matière traitable par application du cisaillement et de l'étirement à la matière traitable.

**3.** Procédé selon la revendication 1 ou 2, dans lequel ladite matière traitable est formée d'au moins des première et seconde couches, chaque couche comprenant une ou les deux desdites première et seconde parties de la matière traitable ; ou dans lequel lesdites première et seconde parties sont formées des première et seconde matières granulaires, dans lequel lesdits premier et second éléments granulaires sont mélangés ensemble.

**4.** Procédé selon l'une quelconque des revendications précédentes, dans lequel ladite étape de chauffage différentiel de ladite première partie amène ladite première partie à fondre.

**5.** Procédé selon l'une quelconque des revendications précédentes, comprenant l'étape de fourniture du chauffage de ladite seconde partie par un transfert de chaleur conducteur ou convectif provenant ladite première partie.

**6.** Procédé selon la revendication 5, dans lequel ledit chauffage conducteur ou convectif amène ladite seconde partie à fondre.

**7.** Procédé selon l'une quelconque des revendications précédentes, dans lequel ladite seconde partie agit comme un dissipateur thermique pour absorber l'énergie thermique provenant de ladite première partie après ladite étape de chauffage différentiel.

**8.** Procédé selon l'une quelconque des revendications précédentes, dans lequel ladite étape de chauffage différentiel chauffe ladite première partie au-dessus de son point de fusion et maintient ladite seconde partie sensiblement en dessous de son point de fusion.

**9.** Procédé selon l'une quelconque des revendications précédentes, comprenant :

a) la distribution de l'énergie micrométrique sensiblement uniformément à travers ladite matière traitable ; ou
b) le ciblage de l'énergie micrométrique vers des zones sélectionnées de la matière traitable pour chauffer lesdites zones.

**10.** Procédé selon l'une quelconque des revendications précédentes, comprenant l'étape de commande : de la densité d'énergie électromagnétique, de la pression et de la température de la matière traitable lors du traitement.

**11.** Procédé selon l'une quelconque des revendications précédentes, dans lequel ladite première partie est :

distribué sensiblement uniformément dans toute la matière traitable ; et
positionné localement pour obtenir un profil de température variable dans la matière traitable.

**12.** Procédé selon l'une quelconque des revendications précédentes, dans lequel l'étape de chauffage de ladite première partie permet à toute la matière traitable d'être mélangée, transférée, façonnée, estampée, injectée ou extrudée pour former un produit.

**13.** Procédé selon l'une quelconque des revendications précédentes, dans lequel la matière traitable est traitée à l'aide d'une technique de traitement par fusion, laquelle comprend les éléments suivants : le moulage par injection, l'extrusion, le moulage par extrusion-soufflage, le moulage par transfert ou le moulage par injection-expansion.

**14.** Procédé selon l'une quelconque des revendications précédentes, dans lequel ledit procédé est mis en œuvre sur un polymère, un oligomère ou un monomère à faible poids moléculaire ; dans lequel l'étape de chauffage induit une polymérisation in situ ou une réaction chimique du monomère ou du polymère à faible poids moléculaire.

**15.** Procédé selon l'une quelconque des revendications précédentes, dans lequel la matière pouvant être chauffée est ou comprend : une matière polymère synthétique ou naturelle, le noir de carbone, une ferrite, un oxyde métallique, des zéolites, la poudre de talc, le ZnC12, le nylon, la poudre de cuivre et autres poudres métalliques, l'oxyde ferreux, l'oxyde de manganèse, et des céramiques et des oxydes.

16. Système de traitement de la matière permettant de traiter un produit intermédiaire, comprenant :

un support de matière supportant un produit intermédiaire ;
le produit intermédiaire comprenant une première partie d'une première matière thermoplastique et une seconde partie d'une seconde matière thermoplastique différente de la première matière thermoplastique, la première matière thermoplastique étant réceptive au rayonnement micrométrique et la seconde matière thermoplastique étant sensiblement non réceptive au rayonnement micrométrique de telle sorte que l'application d'un rayonnement micrométrique au produit intermédiaire entraîne la réduction de la viscosité de ladite première partie de manière à permettre à ladite première partie de s'écouler lorsque la viscosité de ladite seconde partie est sensiblement inchangée ou réduite dans une moindre mesure que la viscosité de la première partie par un tel rayonnement micrométrique, la réduction de la viscosité de la première portion étant suffisante pour permettre à tout le produit intermédiaire de s'écouler ;
un poste de chauffage comprenant un émetteur de rayonnement micrométrique conçu pour transmettre la chaleur par rayonnement micrométrique de manière différentielle auxdites première et seconde parties dudit produit intermédiaire ; et
un poste de façonnage ou de formation de matière utilisable pour façonner ou former lesdites première et seconde parties pour produire ainsi un produit.

17. Système de traitement de la matière selon la revendication 16, dans lequel ledit poste de façonnage ou de formation de la matière est en outre utilisable pour mettre en œuvre au moins un des processus suivants :

le façonnage ou le formage desdites première et seconde parties par écoulement à l'état fondu de ladite matière ;
le façonnage ou le formage de ladite matière par déformation plastique desdites première et seconde parties ; et
le façonnage ou le formage de ladite matière par application du cisaillement et/ou de l'étirement à la matière.

18. Système de traitement de la matière selon la revendication 16 ou 17, comprenant un mélangeur pour mélanger des première et seconde parties granulaires de la matière à traiter.

19. Système de traitement de la matière selon l'une quelconque des revendications 16 à 18, dans lequel ledit poste de chauffage est utilisable pour fournir :

a) la distribution de l'énergie micrométrique sensiblement uniformément à travers ladite matière ; ou
b) le ciblage de l'énergie micrométrique vers des zones sélectionnées de la matière pour chauffer lesdites zones.

20. Système de traitement de la matière selon la revendication 19, dans lequel ledit poste de chauffage comprend un générateur de faisceau d'énergie orientable utilisable pour orienter l'énergie micrométrique vers des parties de la matière à traiter.

21. Système de traitement de la matière selon l'une quelconque des revendications 16 à 20, comprenant un dispositif de commande utilisable pour commander : la densité d'énergie électromagnétique dudit poste de chauffage, la pression et la température de la matière dans ledit poste de façonnage ou de formage.

22. Système de traitement de la matière selon l'une quelconque des revendications 16 à 21, dans lequel ledit poste de façonnage ou de formage permet à la matière entière d'être : mélangée, transférée, façonnée, estampée, injectée ou extrudée pour former un produit.

23. Système de traitement de la matière selon l'une quelconque des revendications 16 à 22, dans lequel ledit poste de façonnage ou de formage est utilisable pour effectuer : le moulage par injection, l'extrusion, le moulage par extrusion-soufflage, le moulage par transfert, et le moulage par injection-expansion.

24. Matière en vrac traitable, comprenant une première partie d'une première matière thermoplastique et une seconde partie d'une seconde matière thermoplastique différente de la première matière thermoplastique, la première matière thermoplastique étant réceptive au rayonnement micrométrique et la seconde matière thermoplastique étant sensiblement non réceptive au rayonnement micrométrique de telle sorte que l'application d'un rayonnement micrométrique à la matière traitable entraîne la réduction de la viscosité de ladite première partie de manière à permettre à ladite première partie de s'écouler lorsque la viscosité de ladite seconde partie est sensiblement inchangée ou réduite dans une moindre mesure que la viscosité de la première partie par un tel rayonnement micrométrique, la réduction de la viscosité de la première partie étant suffisante pour permettre à toute la matière traitable de s'écouler ; dans laquelle lesdites première et seconde parties peuvent être façonnées ou formées ensemble pour former un produit.

**25.** Matière traitable selon la revendication 24, dans laquelle lesdites première et seconde parties peuvent être façonnées ou formées ensemble par les éléments suivants : un processus d'écoulement à l'état fondu, une déformation plastique, et l'application du cisaillement et de l'étirement.

**26.** Matière traitable selon la revendication 24 ou 25, dans laquelle l'au moins une des première et seconde parties comprend un composant de renforcement.

**27.** Matière traitable selon l'une quelconque des revendications 24 à 26, dans laquelle la première portion est :

distribuée sensiblement uniformément dans toute la matière traitable ; et
positionnée localement pour obtenir un profil de température variable dans la matière traitable.

**28.** Matière traitable selon l'une quelconque des revendications 24 à 27, dans laquelle ladite matière comprend un polymère à faible poids moléculaire, un oligomère, un monomère, une matière polymère synthétique ou naturelle, le noir de carbone, une ferrite ou un oxyde métallique, des zéolites, la poudre de talc, $ZnC12$, les poudres de nylon, de cuivre et autres poudres métalliques, l'oxyde ferreux, l'oxyde de manganèse, des céramiques et des oxydes.

**29.** Matière traitable selon l'une quelconque des revendications 24 à 28, dans laquelle ladite matière est ou comprend une matière en couches, une matière granulaire, un liquide ou un gel et dans laquelle lesdites première et seconde parties sont des couches différentes, des composants granulaires différents, des liquides différents ou des gels différents.

ABA

AB

**FIG. 1**

▨▨▨  Non-receptive inner layer

☐  Receptive outer layer

⟶  Incoming radiation of a given frequency

**FIG. 2**

FIG. 3

## FIG. 4

Fig. 5a rapid heating of receptor matrix material (1) in heating cavity (3) by microwave energy (4), from initially uniform receptor (1)/non-receptor (2) material temperatures

Fig. 5b heated receptor matrix material (hashed area) before significant heat flow into non-receptive material (non-hashed area)

Fig. 5c rapid injection/forming stage for bulk material before significant heat flow from receptor (hashed area) into non-receptor material (non-hashed area) or bulk material cooling to low temperature mould cavity (5)

Fig. 5d reaching of equilibrium between receptor and non-receptor surroundings providing internal cooling

Fig. 5e gradual simultaneous cooling of receptor and non-receptor material to lower temperature mould cavity, after reaching thermal equilibrium within the bulk material.

**FIG. 6**

Shake intensity peaks to and fro within cavity

Intensity

Position

## FIG. 7

Absortion spectra of receptive species

Frequency of microwave

## FIG. 8

Start sheet,
uniformly heated

Resultant part,once
thermoformed

Hot

Warm

Warm

Warm

Hot

Warm

Cold

Cold

Hot

Hot

Start sheet, controlled
and variably heated

T

Hot

Warm

Resultant part, once
thermoformed

Cold

## FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6346210 B1
- US 5139407 A
- US 5519196 A
- US 5070223 A
- US 5338611 A

- WO 2004048463 A
- US 2003183972 A
- US 4795665 A
- US 4600614 A
- EP 1115770 B

**Non-patent literature cited in the description**

- **R J WISE ; I D FROMENT.** *Microwave Welding of Thermoplastics,* 2001
- **MEREDITH.** Industrial Microwave Heating. IEE, May 1983, 170

- **MEREDITH.** Industrial Microwave Heating. IEE, May 1983
- **MEREDITH.** Industrial Microwave Heating. IEE, May 1983, 287